# EUROPÄISCHE PATENTSCHRIFT

(11) **EP 0 980 324 B1**
(45) Veröffentlichungstag und Bekanntmachung des Hinweises auf die Patenterteilung: **14.06.2006**
(21) Anmeldenummer: 99913223.6
(22) Anmeldetag: 04.03.1999
(51) Int. Cl.: B60T 1/087

(54) **HYDRODYNAMISCH-MECHANISCHES VERBUNDGETRIEBE**
HYDRODYNAMIC MECHANICAL COMPOUND TRANSMISSION
BOITE DE VITESSES COMPOUND HYDRODYNAMIQUE-MECANIQUE

(30) Priorität: 06.03.1998 DE 19809467; 06.03.1998 DE 29803792 U
(43) Veröffentlichungstag der Anmeldung: 23.02.2000
(73) Patentinhaber: Voith Turbo GmbH & Co. KG, 89522 Heidenheim (DE)
(72) Erfinder: KÖRNER, Tillmann, D-89551 Zang (DE); NITSCHE, Martin, D-89547 Gerstetten (DE); BECKE, Martin, D-89075 Ulm (DE)
(74) Vertreter: Dr. Weitzel & Partner
(86) Internationale Anmeldenummer: PCT/EP1999/001386
(87) Internationale Veröffentlichungsnummer: WO 1999/044871

(56) Entgegenhaltungen:
- DE-A- 2 156 002
- DE-A- 2 521 831
- DE-A- 3 604 393

## Beschreibung

Die Erfindung betrifft ein hydrodynamisch-mechanisches Verbundgetriebe, im einzelnen mit den Merkmalen aus dem Oberbegriff des Anspruchs 1.

Hydrodynamisch-mechanische Verbundgetriebe, umfassend einen hydrodynamischen Drehzahl-/Drehmomentenwandler und einen mechanischen Getriebeteil, sind in einer Vielzahl von Ausführungen bekannt. Die Druckschrift DE 36 04 393 C2 offenbart ein hydrodynamisches Verbundgetriebe, umfassend einen Drehmomentenwandler und ein mit diesem in Serie geschaltetes Schaltgetriebe. Das Schaltgetriebe umfaßt dazu zwei Planetenradsätze, wobei die Planetenträger der beiden Planetenradsätze miteinander gekoppelt sind und den Ausgang des Schaltgetriebes bilden. Die Anzahl der erforderlichen Planetenradstege bzw. Planetenradsätze (u.U. ein Ravigneauxsatz) kann mit einer derartigen Anordnung gering gehalten werden und bei entsprechender Zuordnung von Schalteinrichtungen sind zumindest drei Gangstufen realisierbar, wobei die axiale Baulänge sehr kurz gehalten werden kann. Der hydrodynamische Drehzahl-/Drehmomentenwandler umfaßt ein Pumpenrad, ein Turbinenrad sowie zwei Leiträder - ein erstes Leitrad und ein zweites Leitrad, wobei Mittel vorgesehen sind, welche eine Kopplung des Turbinenrades sowie des ersten Leitrades mit dem mechanischen Getriebeteil in Form des Schaltgetriebes ermöglichen. Im einzelnen ist die Gesamtgetriebeeingangswelle entweder über den hydrodynamischen Drehzahl-/Drehmomentenwandler und dabei über das Turbinenrad mit dem Sonnenrad des einen Planetenradsatzes des mechanischen Getriebeteiles oder aber direkt über eine sogenannte Überbrückungskupplung mit diesem koppelbar. Das erste Leitrad ist über einen Freilauf mit dem Sonnenrad des anderen zweiten Planetenradsatzes des mechanischen Getriebeteiles verbunden. Die charakteristischen Eigenschaften des Drehzahl-/Drehmomentenwandlers in jedem Bereich des Übersetzungsverhältnisses und das Übersetzungsverhältnis des mechanischen Getriebeteils werden durch Umschalten des Übertragungsweges des von der ersten Leitradwelle ausgehenden Momentes geändert, und zwar durch die wahlweise Betätigung von Kupplungs- und/oder Bremseinrichtungen, die entweder ein Festsetzen der ersten Leitradwelle oder aber eine Kopplung der ersten Leitradwelle mit der Turbinenradwelle und damit des ersten Sonnenrades des ersten Planetenradsatzes ermöglichen. Der Vorteil dieses 3-Ganggetriebes besteht in seiner geringen Baugröße. Allerdings ist eine entsprechende Auslegung dieses vorhandenen Getriebes hinsichtlich des Haupteinsatzfalles bzw. eine aufwendige Modifikation dessen erforderlich, um bestimmte Parameter, beispielsweise den Kraftstoffverbrauch eines Fahrzeuges zu optimieren oder höhere Endauslegungsgeschwindigkeiten des Fahrzeuges zu ermöglichen.

Eine Ausführung einer Getriebebaueinheit ist femer der Druckschrift DE 21 56 002 A zu entnehmen. Bei dieser ist ein hydrodynamischer Retarder vorgesehen, welcher am Getriebegehäuse außen angeflanscht ist.

Der Erfindung liegt die Aufgabe zugrunde, ein Getriebe der eingangs genannten Art derart weiterzuentwickeln, dass dieses noch optimaler die bestehenden Einsatzerfordemisse zu erfüllen vermag, wobei die Vorteile des geringen Gewichtes und der geringen Baugröße weiter beibehalten werden sollen. Dabei sind zusätzliche Funktionen, wie die Erzeugung eines Bremsmomentes oder der Antrieb von Nebenaggregaten sowie die Realisierung eines Schnellganges, mit möglichst geringem Aufwand unter Beibehaltung der Vorteile bei geringer Baugröße und mit geringem konstruktiven Aufwand zu realisieren.

Die erfindungsgemäße Aufgabe der Erfindung ist durch die Merkmale des Anspruchs 1 charakterisiert. Vorteilhafte Ausgestaltungen sind in den Unteransprüchen wiedergegeben.

Das hydrodynamisch-mechanische Verbundgetriebe umfasst einen ersten hydrodynamischen Getriebeteil und einen weiteren zweiten mechanischen Getriebeteil. Der erste hydrodynamische Getriebeteil umfasst einen hydrodynamischen Drehzahl-/Drehmomentenwandler. Der mechanische Getriebeteil umfasst wenigstens einen mechanischen Drehzahl-//Drehmomentenwandler. Vorzugsweise wird dabei ein mechanischer Drehzahl-/Drehmomentenwandler eingesetzt, welcher wenigstens zwei Planetenradsätze umfaßt, deren Planetenträger miteinander gekoppelt sind und den Abtrieb des mechanischen Drehzahl-/Drehmomentenwandlers bilden. Das Getriebe weist des weiteren einen hydrodynamischen Retarder auf, der im Gehäuse integriert ist und in räumlicher Nähe zum hydrodynamischen Getriebeelement angeordnet ist, wobei der hydrodynamische Retarder mit dem Abtrieb des mechanischen Drehzahl-/Drehmomentenwandlers gekoppelt ist. Die Kopplung erfolgt dabei durch die vorzugsweise drehfeste Verbindung des Rotorschaufelrades mit den miteinander gekoppelten Getriebeelementen, vorzugsweise den Planetenträgern, die gleichzeitig den Abtrieb des mechanischen Drehzahl-/Drehmomentenwandlers bilden.

Die erfindungsgemäße Anordnung des hydrodynamischen Retarders, welche sich durch die Integration im Getriebegehäuse und die räumliche Anordnung des Retarders bezogen auf die Kraftflußrichtung von der Getriebeeingangswelle zur Getriebeausgangswelle vor dem mechanischen Getriebeteil auszeichnet, wobei das Rotorschaufelrad des hydrodynamischen Retarders mit der Abtriebswelle des mechanischen Getriebeteiles koppelbar ist, d.h. die Anordnung des hydrodynamischen Retarders in unmittelbar räumlicher Nähe des hydrodynamischen Getriebeelementes, ermöglicht es, alle hydraulischen Bauteile des Betriebsmittelversorgungssystemes, wie beispielsweise Zahnradpumpe, Anfahrwandler, Steuereinheit und Versorgungsleitungen, räumlich nahe beieinander im Getriebe zu integrieren, wobei lediglich kurze Wege für die Betriebsmittelführung erforderlich sind, was sich erheblich auf die Arbeitsweise des Getriebes auswirkt, beispielsweise in einer Verringerung der Ansprechzeiten bei Inbetriebnahme der hydrodynamisch arbeitenden Bauelemente wie hydrodynamischer Drehzahl-/Drehmomentenwandler und hydrodynamischer Retarder, Verringerung des hydraulischen Widerstandes sowie Steigerung des energetischen Wirkungsgrades.

Der erste hydrodynamische Getriebeteil und der mechanische Drehzahl-/Drehmomentenwandler bilden eine sogenannte Grundgetriebebaueinheit bzw. Rumpfgetriebe, welche als komplette Montagegruppe geliefert werden kann. Diese ist vorzugsweise um einen Nachschaltsatz erweiterbar, welcher koaxial zur Grundgetriebebaueinheit angeordnet ist und räumlich betrachtet in Kraftflußrichtung im Traktionsbetrieb entweder vor dem mechanischen Drehzahl-/Drehmomentenwandler oder hinter diesem angeordnet ist. Dabei bildet der Abtrieb des mechanischen Drehzahl-/Drehmomentenwandlers gleichzeitig den Eingang der Nachschaltstufe. Der hydrodynamische Retarder ist erfindungsgemäß jedoch in Kraftflußrichtung im Traktionsbetrieb betrachtet, immer vor dem Abtrieb bzw. dem Ausgang des Nachschaltsatzes angeordnet. Für die weiteren Anordnungsmöglichkeiten in Bezug auf den mechanischen Drehzahl-/Drehmomentenwandler des mechanischen Getriebeteiles ergeben sich im wesentlichen die folgenden zwei Möglichkeiten:
1. Anordnung des Retarders in Kraftflußrichtung im Traktionsbetrieb betrachtet räumlich vor dem mechanischen Drehzahl-/Drehmomentenwandler
2. Anordnung des hydrodynamischen Retarders in Kraftflußrichtung im Traktionsbetrieb betrachtet räumlich hinter dem mechanischen Drehzahl-/Drehmomentenwandler.

Bei der erstgenannten Möglichkeit, den Nachschaltsatz räumlich in Kraftflußrichtung im Traktionsbetrieb betrachtet vor dem mechanischen Drehzahl-/Drehmomentenwandler anzuordnen, ergeben sich für die Möglichkeit der Integration des hydrodynamischen Retarders wiederum zwei Möglichkeiten, die auch mit den vorher genannten zwei Möglichkeiten kombinierbar sind:
1. Anordnung des hydrodynamischen Retarders zwischen dem Nachschaltsatz und dem mechanischen Drehzahl-/Drehmomentenwandler
2. Anordnung des hydrodynamischen Retarders räumlich in Kraftflußrichtung im Traktionsbetrieb betrachtet vor der mechanischen Nachschaltstufe.

In Analogie gelten diese Aussagen auch bei Anordnung des Nachschaltsatzes räumlich in Kraftflußrichtung im Traktionsbetrieb betrachtet hinter dem mechanischen Drehzahl-/Drehmomentenwandler.

Die beschriebenen Grundvarianten ermöglichen die Konzeption eines Gesamtgetriebes mit integrierter Bremsfunktion bei gleichzeitig geringer Baugröße und geringem Gewicht, wobei mittels dem Nachschaltsatz weitere Getriebestufen realisiert werden können und durch die entsprechende Auslegung der einzelnen Getriebeelemente des mechanischen Drehzahl-/Drehmomentenwandlers im Zusammenhang mit der mechanischen Nachschaltstufe ein, im wesentlichen gleichmäßiger Zugkraftverlauf über den gesamten Betriebsbereich erzielt wird.

Die bauliche Integration des hydrodynamischen Retarders bzw. dessen zentrale Anordnung im Gesamtgetriebe, insbesondere vor dem mechanischen Drehzahl-/Drehmomentenwandler ermöglicht es, einen Winkeltriebanbau am Getriebe zu realisieren und des weiteren eine zentrale Betriebsmittelversorgung, wie oben bereits erwähnt, für das hydrodynamische Getriebeelement und den hydrodynamischen Retarder bereitzustellen, anstelle von einzelnen Betriebsmittelversorgungssystemen.

Der hydrodynamische Retarder ist im Gesamtgetriebe somit derart angeordnet, daß dieser hinsichtlich seiner Funktion eine Mischung aus Primär- und Sekundärretarder darstellt. Der hydrodynamische Retarder fungiert nicht als reiner Primärretarder, da diese im Allgemeinen vor den mechanischen Getriebebaugruppen angeordnet sind, und fungiert des weiteren jedoch auch nicht als reiner Sekundärretarder, da diese im Allgemeinen der Getriebeausgangswelle immer vorgeschalten sind. Zwischen ihm und dem Getriebeausgang ist eine mechanische Übertragungsstufe entweder beim reinen 3-Gang-Getriebe in Form des mechanischen Drehzahl-/Drehmomentenwandlers oder aber bei einer Getriebeanordnung aus hydrodynamischem Getriebeteil und mechanischem Drehzahl-/Drehmomentenwandler mit mechanischer Nachschaltstufe wenigstens vor der mechanischen Nachschaltstufe räumlich betrachtet angeordnet, womit dieser in Kraftflußrichtung über die Nachschaltstufe direkt auf den Abtrieb wirken kann. Die Ansteuerung kann über die Steuerung so erfolgen, daß fahrmechanisch gesehen alle Eigenschaften eines Sekundärretarders erzielt werden oder eines Primärretarders. Die Rückschaltphilosophie kann wahlweise oder intelligent genutzt werden.

Die Kombination mit den Nachschaltstufen ermöglicht eine Mehrgängigkeit, welche wiederum dazu führt, daß der zu überstreichende Betriebsbereich mit einer Mehrzahl von Gängen realisiert werden kann, und vorzugsweise wenigstens ein Schnellgang bzw. ein sogenannter Overdrivegang vorgesehen wird, wobei mittels der höheren Getriebespreizung phi-gesamt eine optimale Anpassung bei unterschiedlichen Motoren und Hinterachsen zum minimalen Kraftstoffverbrauchsbereich der Antriebsmaschine führen kann. Daher werden vorzugsweise die Gangstufensprünge phi des mechanischen Getriebeteils derart gewählt, daß Bereiche kleiner gleich 1,45 verwendet werden. Für die zulässigen Übersetzungen i ergibt sich dabei im ersten Gang ein zu realisierender Bereich von 2,75 - 3,50. Dadurch wird es möglich, den Übergang des Zugkraftverlaufes von den Wandlergängen in die passenden LU-Gänge (d.h. die Gänge, bei welchen die Leistungsübertragung von der Getriebeeingangswelle auf den mechanischen Getriebeteil über die Durchkupplung bzw. die Wandlerüberbrückungskupplung und somit unter Umgehung des hydrodynamischen Getriebeteiles erfolgt) bei relativ niedrigen Geschwindigkeiten zu ermöglichen ohne Zugkraftverlust. Dadurch hat man stufenlos gleichförmig stetige Zugkraftverläufe in den unteren Wandlergängen, und in den oberen Gängen wirkt sich der kleine Stufensprung ebenfalls kraftstoffsparend aus, da sich zu jedem Betriebspunkt unterhalb der gesetzlichen Fahrgeschwindigkeit ein kraftstoffsparender Gang wählen läßt.

Die räumliche Anordnung des hydrodynamischen Retarders ermöglicht es, auf einfache Art und Weise einen Getriebebaukasten zu schaffen, welcher jeweils ein Grundgetriebe, umfassend ein hydrodynamisches Getriebeelement sowie den mechanischen Drehzahl-/Drehmomentenwandler umfaßt und welcher mit entsprechend ausgestalteten Nachschaltstufen kombiniert werden kann. Dabei kann der hydrodynamische Retarder entweder Bestandteil des Grundgetriebes oder aber des Getriebeteils, welches an das Grundgetriebe anflanschbar ist und die Nachschaltstufe umfaßt, sein. Mit dem Grundgetriebe für sich allein sind dabei wenigstens drei Schaltstufen realisierbar, während je nach Auslegung der Nachschaltstufe weitere Gänge verwirklicht werden können. Die Nachschaltstufe ist vorzugsweise als einfacher Planetenradsatz ausgeführt, wobei diesem zur Realisierung der Gruppenfunktion Schalteinrichtungen in Form von Brems- und/oder Kupplungseinrichtungen zugeordnet sind. Die Nachschaltstufe bzw. wenigstens deren An- und Abtriebselemente sind dabei immer koaxial zum Grundgetriebe angeordnet. Aufgrund der Realisierung eines Baukastensystems aus Grundgetriebe und Nachschaltsatz können die Baukosten für das Gesamtgetriebe gering gehalten werden.

Die Nachschaltstufe dient im vorliegenden Fall der Aufsplittung der mit dem Grundgetriebe realisierbaren drei Schaltstufen in zwei Teilstufen. Dies bedeutet, daß die einzelnen aufeinander folgenden Gänge durch wechselweise Betätigung der entsprechenden Schalteinrichtungen, Kupplungs- und/oder Bremseinrichtungen an der Nachschaltstufe. Jeweils zwei aufeinander folgende Gänge vom ersten Gang ausgehend betrachtet zeichnen sich somit im wesentlichen durch Betätigung derselben Schalteinrichtungen im Grundgetriebe aus.

Ein Beispiel einer besonders vorteilhaften erfindungsgemäßen Ausführung ist im einzelnen wie folgt aufgebaut:
Das hydrodynamische Getriebeelement umfaßt wenigstens ein Pumpenrad, ein Turbinenrad sowie eine Leitradeinrichtung, umfassend ein erstes Leitrad und ein zweites Leitrad. Das zweite Leitrad ist dabei über einen Freilauf mit dem Getriebegehäuse verbunden. Das erste Leitrad steht über eine sogenannte Leitradwelle mit dem mechanischen Drehzahl-/Drehmomentenwandler in Triebverbindung. Der mechanische Drehzahl-/Drehmomentenwandler umfaßt wenigstens zwei Planetenradsätze, einen ersten Planetenradsatz und einen zweiten Planetenradsatz, wobei jeder Planetenradsatz jeweils ein Sonnenrad, ein Hohlrad, Planetenräder und einen Planetenträger aufweist. Die beiden Planetenradsätze - erster Planetenradsatz und zweiter Planetenradsatz - sind hinsichtlich eines Getriebeelementes miteinander drehfest gekoppelt. Vorzugsweise wird das erste Getriebeelement des ersten Planetenradsatzes, welches mit einem ersten Getriebeelement des zweiten Planetenradsatzes drehfest verbunden ist, jeweils vom Planetenträger des zugehörigen Planetenradsatzes gebildet. Die beiden Sonnenräder der einzelnen Planetenradsätze, des ersten Planetenradsatzes und des zweiten Planetenradsatzes, bilden die Eingänge des mechanischen Drehzahl-/Drehmomentenwandlers. Der erste Eingang, welcher mit dem Sonnenrad des ersten Planetenradsatzes gekoppelt ist, ist über einen Freilauf mit dem ersten Leitrad des hydrodynamischen Drehzahl-/Drehmomentenwandlers verbunden. Das Sonnenrad des zweiten Planetenradsatzes ist vorzugsweise mit der Turbinenradwelle, welche entweder über den hydrodynamischen Drehzahl-/Drehmomentenwandler oder die Überbrückungskupplung mit der Getriebeeingangswelle koppelbar ist. Der hydrodynamische Drehzahl-/Drehmomentenwandler ist derart im Getriebe angeordnet, daß dessen Statorschaufelrad am Getriebegehäuse feststellbar ist, während das Rotorschaufelrad vorzugsweise mit dem Abtrieb des mechanischen Drehzahl-/Drehmomentenwandlers gekoppelt ist. Dieser Abtrieb wird von den miteinander gekoppelten Getriebeelementen der beiden Planetenradsätze gebildet, vorzugsweise im vorliegenden Fall der Kopplung der Planetenträger. Der Abtrieb des mechanischen Drehzahl-/Drehmomentenwandlers bildet den Eingang der mechanischen Nachschaltstufe und ist somit über die entsprechende Gangstufung mit der Getriebeausgangswelle gekoppelt. Der hydrodynamische Retarder wird über die Nachschaltstufe an der Getriebeausgangswelle wirksam und übt somit die Funktion des Sekundärretarders aus. Durch die Nachschaltstufe erfährt das Rotorschaufelrad des hydrodynamischen Retarders des weiteren eine Übersetzung. Über den gesamten Betriebsbereich ist der hydrodynamische Retarder, bezogen auf die Drehzahl der Abtriebswelle, jeweils mit zwei unterschiedlichen Übersetzungen betreibbar. Die auf diese Art und Weise erfolgende Kopplung des hydrodynamischen Retarders mit der Abtriebswelle ermöglicht es auch, einen Bremsvorgang im Normalbetrieb zu realisieren, wobei die zur Erzielung eines optimalen Bremsverhaltens durch Anpassung des Füllungsgrades an das zu erzeugende Bremsmoment erforderliche Änderung des Füllungsgrades des hydrodynamischen Retarders beispielsweise lediglich in der übernächsten Gangstufe erfolgen muß, d.h. es sind keine ständigen Füllungsgradregelungen beim Wechsel von einem Gang in den nächsten erforderlich. Um gangunabhängig gleiche Bremsmomente zu erzielen, muß die Füllung des Retarders bei Übersetzung der Nachschaltgruppe ins Schnelle größer sein, als bei der "Direktübersetzung" von 1,0. Je nach Rückschaltstrategie muß die Füllung angepaßt werden, wenn alle Gänge nacheinander zurückgeschaltet werden. Die Füllung muß nicht angepaßt werden, wenn nur zu jedem übernächsten Gang zurückgeschaltet wird. Die auf diese Art und Weise erfolgende Kopplung des hydrodynamischen Retarders mit der Abtriebswelle ermöglicht es, immer optimale Bremsvorgänge zu realisieren und ein optimales Bremsverhaiten zu erzielen.

Zur Realsierung der einzelnen Gangstufen sind Schalteinrichtung in Form von Bremseinrichtungen und Kupplungseinrichtungen vorgesehen, wobei diese vorzugsweise in Lamellenbauart ausgeführt sind. Die einzelnen Schalteinrichtungen sind entsprechend dem gewünschten einzulegenden Gang und der dabei erhältlichen Übersetzung zu betätigen. Dazu ist vorzugsweise eine Getriebesteuerung vorgesehen. Eine erste Bremseinrichtung dient dabei der Feststellung der Leitradwelle und damit des Sonnenrades des ersten Planetenradsatzes. Eine zweite Bremseinrichtung dient der Feststellung des Hohlrades des ersten Planetenradsatzes und eine dritte Bremseinrichtung der Feststellung des Hohlrades des zweiten Planetenradsatzes des mechanischen Drehzahl-/Drehmomentenwandlers. Eine weitere vierte Bremseinrichtung dient der Feststellung des Sonnenrades der Nachschaltstufe. Ein erstes Kupplungselement dient der Realisierung der drehfesten Verbindung des Sonnenrades des ersten Planetenradsatzes und des Sonnenrades des zweiten Planetenradsatzes.

Bei Anordnung der Nachschaltstufe in Kraftflußrichtung von der Getriebeeingangswelle zur Getriebeausgangswelle räumlich betrachtet vor dem mechanischen Drehzahl-/Drehmomentenwandler besteht die Möglichkeit, auf einfache Art und Weise Nebenabtriebe zu realisieren. Die bloße Anordnung der mechanischen Nachschaltstufe vor dem mechanischen Drehzahl-/Drehmomentenwandler bildet eine erste Grundkonfiguration, welche sich durch die Realisierung eines Mehrganggetriebes, insbesondere Sechsganggetriebes bei gleichzeitiger Bauraumverkürzung, insbesondere bei gleichbleibendem Bauraumbedarf gegenüber dem Grundgetriebe auszeichnet. Die Nachschaltstufe ist vorzugsweise ebenfalls in Form eines einfachen Planetenradgetriebes aufgebaut, wobei jedoch lediglich ein Schaltelement in Form der vierten Bremseinrichtung vorzusehen ist, welche der Feststellung des Sonnenrades dient. Ansonsten ist der Steg der mechanischen Nachschaltstufe mit dem Steg der mechanischen Drehzahl-/Drehmomentenwandlungseinrichtung gekoppelt. Dadurch ist es möglich, drei der Gangstufen ohne Betätigung eines Schaltelementes an der Nachschaltstufe zu realisieren, da der Steg der Nachschaltstufe mit der gleichen Drehzahl wie der Ausgang der mechanischen Drehzahl-/Drehmomentenwandlungseinrichtung dreht. Der Ausgang des Nachschaltsatzes wird vom Hohlrad gebildet. Dieses steht mit weiteren drehzahl-/drehmomentenübertragenden Elementen in Triebverbindung, beispielsweise mit einem Stirnrad oder, je nach Ausgestaltung der Verzahnung des Hohlrades, auch einem Kegelrad. Bei Auslegung des Getriebes sind die dadurch sich ergebenden Übersetzungen mit einzubeziehen. Es besteht des weiteren die Möglichkeit, zusätzlich zum Hauptabtrieb, welcher parallel zur Getriebesymmetrieachse angeordnet ist, Nebenabtriebe vorzusehen. Diese können beispielsweise an den Ausgang des mechanischen Drehzahl-/Drehmomentenwandlers, d.h. vorzugsweise an den Steg direkt angekoppelt werden. Der Nebenabtrieb kann dabei gleichzeitig auch ein zweiter Hauptabtrieb sein, wodurch auf einfache Art und Weise das Grundgetriebe zu einem allradantriebsfähigen Getriebe modifiziert wird. In diesem Fall erfolgt der erste Hauptabtrieb über eine Welle parallel zur Getriebesymmetrieachse, vorzugsweise über das Hohlrad der mechanischen Nachschaltstufe, während der zweite Hauptabtrieb an den Ausgang, hier des Steges des mechanischen Drehzahl-/Drehmomentenwandlers koppelbar ist und vor diesem liegt. Die beiden Abtriebe sind in einem Winkel zueinander angeordnet - der erste Abtrieb verläuft koaxial zur theoretischen Getriebeachse, während der zweite Abtrieb senkrecht zu dieser Achse erfolgt, wobei beide vorzugsweise als identische Planetenradsätze aufgebaut sind und der den senkrechten Abtrieb vorzugsweise direkt über das Hohlrad bildende Planetenradsatz vor dem mechanischen Drehzahl-/Drehmomentenwandler angeordnet ist-, daher ist es erforderlich, insbesondere für den Allradantrieb, eine entsprechende Drehzahl-/Drehmomentenwandlungseinrichtung vorzusehen, die es ermöglicht, die beiden im Winkel zueinander angeordneten Abtriebe auf zwei im wesentlichen parallel zueinander angeordnete Antriebswellen zu realisieren. In diesem Fall wird vorzugsweise eine Übertragungsstufe mittels Kegelrädern realisiert.

Die erfindungsgemäße Ausführung ist nachfolgend anhand von Figuren erläutert.
- Figur 1: verdeutlicht eine vorteilhafte Ausgestaltung eines erfindungsgemäß gestalteten Getriebes;
- Figur 2: verdeutlicht ein Schaltschema zur Betätigung der einzelnen Kupplungs- und/oder Bremseinrichtungen für die einzelnen Getriebeelemente;
- Figur 3: verdeutlicht eine weitere Ausgestaltung eines erfindungsgemäß gestalteten Getriebes mit integriertem Nachschaltsatz und Anordnung des hydrodynamischen Retarders zwischen dem mechanischen Drehzahl-/Drehmomentenwandler und der mechanischen Nachschaltstufe;
- Figur 4a: verdeutlicht eine Ausführung eines erfindungsgemäß gestalteten Getriebes mit integrierter Nachschaltstufe vor dem mechanischen Drehzahl-/Drehmomentenwandler mit Anordnung des hydrodynamischen Retarders vor der Nachschaltstufe;
- Figur 4b: verdeutlicht eine Ausführung eines erfindungsgemäß gestalteten Getriebes mit Anordnung der mechanischen Nachschaltstufe vor dem mechanischen Drehzahl-/Drehmomentenwandler und Anordnung des hydrodynamischen Retarders zwischen der mechanischen Nachschaltstufe und dem mechanischen Drehzahl-/Drehmomentenwandler;
- Figuren 5a und 5b: verdeutlichen Ausführungen entsprechend den Figuren 4a und 4b mit zusätzlicher Eignung zum geschwindigkeitsabhängigen Antrieb eines Nebenaggregates;
- Figur 6: verdeutlicht eine Ausführung entsprechend Figur 5b zum Einsatz bei Allradantrieben;
- Figur 7: verdeutlicht eine Ausführung einer Getriebebaueinheit mit hydrodynamischem Retarder vor dem mechanischen Nachschaltsatz.

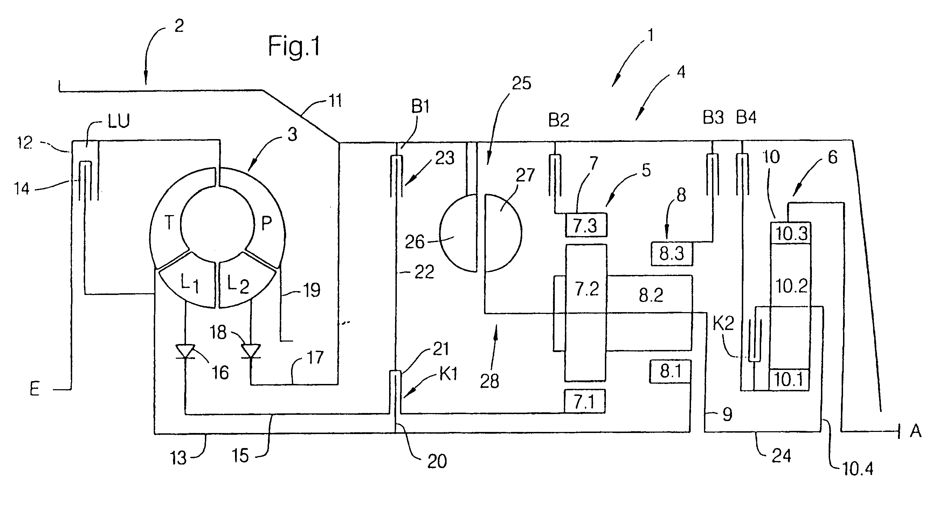

Die Figur 1 verdeutlicht beispielhaft eine vorteilhafte Ausführung eines erfindungsgemäß gestalteten hydrodynamisch-mechanischen Verbundgetriebes 1. Das hydrodynamisch-mechanische Verbundgetriebe 1 umfaßt einen ersten hydrodynamischen Getriebeteil 2 in Form eines hydrodynamischen Drehzahl-/Drehmomentenwandlers 3 und einen zweiten mechanischen Getriebeteil 4. Der mechanische Getriebeteil 4 umfaßt einen mechanischen Drehzahl-/Drehmomentenwandler 5 und einen, diesem in Kraftflußrichtung im Traktionsbetrieb nachgeschalteten Gruppensatz. Der mechanische Drehzahl-/Drehmomentenwandler 5 ist als abgewandelter Ravigneaux-Planetenradsatz ausgeführt. Dieser umfaßt einen ersten Planetenradsatz 7 und einen zweiten Planetenradsatz 8, welche einen gemeinsam genutzten Planetenradträger 9 aufweisen. Dieser stellt die Kopplung zwischen einem Getriebeelement des ersten und des zweiten Planetenradsatzes dar. Der erste Planetenradsatz 7 umfaßt ein Sonnenrad 7.1, Planetenräder 7.2 und ein Hohlrad 7.3. Der zweite Planetenradsatz 8 umfaßt ein Sonnenrad 8.1, Planetenräder 8.2 und ein Hohlrad 8.3.

Der Gruppensatz 6 umfaßt wenigstens einen Planetenradsatz 10, welcher ein Sonnenrad 10.1, Planetenräder 10.2, ein Hohlrad 10.3 und einen Steg 10.4 aufweist.

Der hydrodynamisch-mechanische Drehzahl-/Drehmomentenwandler 3 umfaßt ein Turbinenrad T, ein Pumpenrad P, ein erstes Leitrad L1 und ein zweites Leitrad L2 und ist durch ein Gehäuse 11 abgedeckt. Das Pumpenrad P ist mit einer Getriebeeingangswelle E, welche wenigstens mittelbar mit einer, dem Antrieb dienenden Antriebsmaschine koppelbar ist, vorzugsweise mit einem Schwungrad 12 einer Verbrennungskraftmaschine derart verbunden, daß die Kraft vom Schwungrad 12 auf das Pumpenrad P übertragen wird. Das Turbinenrad T ist mit einer Turbinenradwelle 13 drehfest verbunden. Um die Vorteile der hydrodynamischen Drehmomentenübertragung mit Überbrückungskupplung zu nutzen, welche im folgenden wären:
- selbsttätige stufenlose Einstellung des Verhältnisses zwischen der An- und Abtriebsdrehzahl entsprechend der Belastung auf der Abtriebsseite
- Zurverfügungstehen des maximalen Drehmomentes für einen Anfahrvorgang mit hoher Beschleunigung;
- Möglichkeit der Wärmeabfuhr durch Fremd- oder Oberflächenkühlung
- Trennung des hydrodynamischen Drehzahl-/Drehmomentenwandlers vom Abtrieb, insbesondere vom Fahrzeug bei kleinen Antriebsdrehzahlen und Übertragung eines geringen Restmomentes, so daß ein Abwürgen der Antriebsmaschine von der Abtriebsseite her nicht möglich ist
- verschleißfreie Leistungsübertragung
und gleichzeitig die Nachteile einer hydrodynamischen Leistungsübertragung, welche im wesentlichen in einem oftmals nicht ausreichend erzielbaren Wirkungsgrad besteht, um mit einem hydrodynamischen Getriebe allein arbeiten zu können, da Verlustleistungsanteile, die sich aus Reibungs- und Stoßverlusten zusammensetzen, die übertragbare Gesamtleistung vermindern und die erzielten Wandlungsbereiche für den Fahrzeugeinsatz oft nicht ausreichend sind, wird der hydrodynamische Drehzahl-/Drehmomentenwandler 3 nur in den unteren Gangstufen, vorzugsweise nur während des Anfahrvorganges, zur Leistungsübertragung genutzt. Zur Verbesserung des Übertragungswirkungsgrades wird daher der hydrodynamische Drehzahl-/Drehmomentenwandler 3 aus der Leistungsübertragung herausgenommen, vorzugsweise durch Überbrückung.

Zu diesem Zweck ist zwischen dem Turbinenrad T und dem Schwungrad 12 bzw. der Getriebeeingangswelle eine Überbrückungskupplung 14 angeordnet.

Das erste Leitrad L1 ist auf der Turbinenseite zwischen dem Turbinenrad T und dem Pumpenrad P angeordnet und durch ein Lager reversibel gelagert. Das erste Leitrad L1 ist mit einer ersten Leitradwelle 15 drehfest verbindbar, wobei zwischen dem ersten Leitrad L1 und der Leitradwelle 15 ein Freilauf 16 vorgesehen ist, welcher derart ausgelegt wird, daß er ein Moment auf die erste Leitradwelle 15 überträgt, wenn sich das erste Leitrad L1 in umgekehrter Richtung, d.h. entgegengesetzter Drehrichtung, zum Turbinenrad T dreht und welcher leerläuft, wenn das erste Leitrad L1 in normaler Richtung, d.h. in gleicher Rotationsrichtung wie das Turbinenrad T rotiert. Das zweite Leitrad L2 ist zwischen dem Turbinenrad T und dem Pumpenrad P auf der Pumpenseite angeordnet und über eine zweite Leitradwelle 17 mit dem Gehäuse 11 koppelbar. Zwischen dem zweiten Leitrad L2 und der zweiten Leitradwelle 17 ist ein zweiter Freilauf 18 angeordnet, mittels welchem das zweite Leitrad L2 mit der zweiten Leitradwelle 17 gekoppelt werden kann, jedoch nur dann, wenn sich das zweite Leitrad L2 in entgegengesetzter Richtung zum Turbinenrad T dreht.

Das Pumpenrad P ist mit einer Pumpenradwelle 19 drehfest verbunden, welche über ein Lager im Gehäuse 11 drehbar gelagert ist.

Zur Realisierung der einzelnen Gangstufen und Auslegung der einzelnen Gänge sind den einzelnen Elementen des hydrodynamisch-mechanischen Verbundgetriebes 1 Schaltelemente zugeordnet. Zwischen dem hydrodynamischen Getriebeteil 2 und dem mechanischen Getriebeteil 4 sind eine erste Kupplungseinrichtung K1 und eine erste Bremseinrichtung B1 vorgesehen.

Das Turbinenrad T und die mit diesem drehfest koppelbare Turbinenradwelle 13 ist mit dem Sonnenrad 8.1 des zweiten Planetenradsatzes 8 des mechanischen Drehzahl-/Drehmomentenwandlers 5 gekoppelt. Vorzugsweise sind das Turbinenrad T und das Sonnenrad 8.1 des zweiten Planetenradsatzes 8 auf einer gemeinsamen Welle, hier der Turbinenradwelle 13, angeordnet die Turbinenradwelle 13 trägt dabei auch die Kupplungsscheibe 20 der ersten Kupplung K1. Die erste Kupplung K1 weist des weiteren eine Kupplungsabdeckung 21 auf, welche mit der ersten Leitradwelle 15 gekoppelt ist. Des weiteren ist das erste Leitrad L1 über die erste Leitradwelle 15 mit dem Sonnenrad 7.1 des ersten Planetenradsatzes 7 des mechanischen Drehzahl-/Drehmomentenwandlers 5 verbindbar. Die Kupplungsabdeckung 21 ist dabei vorzugsweise einstückig mit der ersten Leitradwelle 15 verbunden. Die erste Leitradwelle 15 ist als Hohlwelle ausgeführt, welche die Leitradwelle 13 in Umfangsrichtung umschließt.

Mit der Kupplungsabdeckung 21 der ersten Kupplung K1 ist ein vorzugsweise scheibenförmiges Element 22 verbunden und bildet mit dieser eine bauliche Einheit, an deren äußerem Umfangsbereich 23 die erste Bremseinrichtung B1 angreifen kann. Die erste Bremseinrichtung B1 dient dabei zum Festsetzen des ersten Leitrades L1 über die Leitradwelle 15 und/oder des ersten Sonnenrades 7.1 des ersten Planetenradsatzes 7 des mechanischen Drehzahl-/Drehmomentenwandlers 5. Weitere Schaltelemente, hier die Schaltelemente in Form von Bremseinrichtungen B2 und B3, sind den einzelnen Planetenradsätzen 7 bzw. 8 des mechanischen Drehzahl-/Drehmomentenwandlers 5 zugeordnet. Im dargestellten Fall ist das zweite Bremselement B2 dem Hohlrad 7.3 des ersten Planetenradsatzes 7 und das dritte Bremselement B3 dem Hohlrad 8.3 des zweiten Planetenradsatzes 8 des mechanischen Drehzahl-/Drehmomentenwandlers 5 zugeordnet. Die Kopplung des mechanischen Drehzahl-/Drehmomentenwandlers 5 mit der Getriebeeingangswelle E über den hydrodynamischen Drehzahl-/Drehmomentenwandler 3 bzw. dessen Überbrückung über die Überbrückungskupplung 14 erfolgt dabei durch Kopplung des Turbinenrades T bzw. der Turbinenradwelle 13 mit einem ersten Getriebeelement des mechanischen Drehzahl-/Drehmomentenwandlers 5 und des ersten Leitrades L1 mit einem weiteren zweiten Getriebeelement des mechanischen Drehzahl-/Drehmomentenwandlers 5. Als erstes Getriebeelement des mechanischen Drehzahl-/Drehmomentenwandlers 5 fungiert hier das Sonnenrad 8.1 des zweiten Planetenradsatzes 8. Als zweites Getriebeelement fungiert das Sonnenrad 7.1 des ersten Planetenradsatzes 7. Die mit den beiden Sonnenrädern 7.1 bzw. 8.1 gekoppelten Wellen, hier die erste Leitradwelle 15 und die Turbinenradwelle 13, fungieren als Eingangswellen des mechanischen Drehzahl-/Drehmomentenwandlers 5. Ein weiteres drittes Getriebeelement ist über den Gruppensatz 6 mit der Getriebeausgangswelle A verbunden. Als drittes Getriebeelement fungiert der Planetenträger 9, welcher von beiden Planetenradsätzen 7 und 8 gemeinsam genutzt wird. Das dritte Getriebeelement des mechanischen Drehzahl-/Drehmomentenwandlers 5 ist mit dem Eingang, welcher von einem ersten Getriebeelement des Gruppensatzes 6 gebildet wird, verbunden. Vorzugsweise wird diese Verbindung über eine drehfeste Kopplung vom dritten Getriebeelement des mechanischen Drehzahl-/Drehmomentenwandlers 5 und ersten Getriebeelement des Gruppensatzes 6 realisiert. Beide sind vorzugsweise auf einer gemeinsamen Verbindungswelle 24 angeordnet. Das erste Getriebeelement des Gruppensatzes 6 wird von dessen Planetenträger 10.4 gebildet. Ein zweites Getriebeelement des Gruppensatzes 6 ist drehfest mit der Getriebeausgangswelle A des hydrodynamisch-mechanischen Verbundgetriebes 1 verbunden. Als zweites Getriebeelement fungiert im dargestellten Fall das Hohlrad 10.3 des Planetenradsatzes 10 des Gruppensatzes 6. Während der mechanische Drehzahl-/Drehmomentenwandler 5 in Kombination mit dem hydrodynamischen Drehzahl-/Drehmomentenwandler 3 der Realisierung von drei Gangstufen dient, können durch Kombination des hydrodynamischen Drehzahl-/Drehmomentenwandlers 3, des mechanischen Drehzahl-/Drehmomentenwandlers 5 mit dem Gruppensatz 6 im dargestellten Fall sechs Gangstufen realisiert werden. Zu diesem Zweck sind dem Gruppensatz 6 jeweils eine weitere Kupplungseinrichtung, hier die zweite Kupplungseinrichtung K2 und eine weitere Bremseinrichtung, hier die vierte Bremseinrichtung B4, zugeordnet. Das vierte Bremselement dient dabei der Feststellung des Sonnenrades 10.1 des Gruppensatzes 6. Die zweite Kupplungseinrichtung K2 ermöglicht die starre Kopplung zwischen dem Planetenträger 10.4 und dem Sonnenrad 10.1 des Planetenradsatzes 10 des Gruppensatzes 6. Erfindungsgemäß ist neben dem Gruppensatz 6 im Getriebe 1 ein hydrodynamischer Retarder 25 angeordnet. Dieser übernimmt die Funktion eines Sekundärretarders, d. h. der Abbremsung der Getriebeausgangswelle. Räumlich ist der hydrodynamische Retarder 25 jedoch vor dem Gruppensatz 6 in Kraftflußrichtung im Traktionsbetrieb betrachtet, angeordnet. Der hydrodynamische Retarder 25 ist somit im hydrodynamisch-mechanischen Verbundgetriebe 1 im Getriebegehäuse 11 integriert. Der hydrodynamische Retarder 25 umfaßt ein feststehendes Statorschaufelrad 26, welches im dargestellten Fall gestellfest mit dem Gehäuse 11 verbunden ist. Des weiteren weist der hydrodynamische Retarder 25 ein Rotorschaufelrad 27 auf, welches mit dem Ausgang des mechanischen Drehzahl-/Drehmomentenwandlers 5 und dem Eingang des Gruppensatzes 6 gekoppelt ist. Dies bedeutet im dargestellten Fall, daß das Rotorschaufelrad 27, der Planetenträger 9 sowie der Planetenträger 10.4 miteinander drehfest koppelbar sind, vorzugsweise auf einer gemeinsamen Welle angeordnet sind. Diese ist hier mit 28 bezeichnet.

Die räumlich nahe Anordnung des hydrodynamischen Retarders 25 und des hydrodynamischen Drehzahl-/Drehmomentenwandlers 3 ermöglichen es, die erforderlichen Bauelemente zur Betriebsmittelversorgung der hydrodynamischen Bauteile ebenfalls räumlich nahe beieinander im Getriebe 1 anzuordnen. Die erforderlichen Betriebsmittelleitungen können dabei sehr kurz ausgeführt werden, insbesondere können die gleichen Betriebsmittelversorgungsleitungen sowohl für den hydrodynamischen Retarder 25 als auch den hydrodynamischen Drehzahl-/Drehmomentenwandler 3 genutzt werden. In Analogie gilt diese Aussage auch für die erforderlichen Kühlkreisläufe, welche den Betriebsmittelversorgungskreisläufen unmittelbar zugeordnet sein können und vorzugsweise über einen gemeinsamen Wärmetauscher miteinander gekoppelt sind. Die konstruktive Ausführung des Getriebes mit im Getriebe integriertem hydrodynamischen Retarder 25 in der Funktion als Sekundärretarder und dem Gruppensatz ermöglicht eine kompakte Getriebebauweise, welche vor allem auch zur Realisierung eines Baukastensystems mit freier Winkelabtriebwahl geeignet ist.

Die einzelnen Elemente des Betriebsmittelversorgungssystems, beispielsweise Betriebsmittelversorgungsleitungen, Zahnradpumpe, Steuerblöcke, Filter können ebenfalls im Getriebegehäuse integriert werden. Die kurze Leitungsführung hat des weiteren den Vorteil eines geringen hydrodynamischen Strömungswiderstandes sowie der Verringerung der Ansprechzeiten der hydrodynamischen Bauelemente, insbesondere des hydrodynamischen Retarders 25 und des hydrodynamischen Drehzahl-/Drehmomentenwandlers 3. Der energetische Wirkungsgrad bezüglich der hydrodynamischen Komponenten kann dadurch erheblich vergrößert werden.

Die dargestellte konstruktive Ausführung des mechanisch-hydrodynamischen Verbundgetriebes 1 stellt eine vorteilhafte Variante dar. Im einzelnen wird es aufgrund der baukastenartigen Zusammenfügung möglich, ein Grundgetriebe, umfassend den hydrodynamischen Getriebeteil 2 und den mechanischen Drehzahl-/Drehmomentenwandler 5 des mechanischen Getriebeteils 4, mit einem beliebigen Gruppensatz 6 zu kombinieren, indem der Gruppensatz 6 lediglich an den Ausgang des Grundgetriebes angefügt, insbesondere angeflanscht, wird. Des weiteren bedarf es keines erheblichen zusätzlichen Aufwandes, den hydrodynamischen Retarder 25 vor dem Gruppensatz, vorzugsweise auch vor dem mechanischen Drehzahl-/Drehmomentenwandler im Getriebegehäuse zu integrieren.

Die einzelnen Schalteinrichtungen K1, K2 sowie B1 bis 84 sind vorzugsweise in Lamellenbauart ausgeführt. Andere Ausführungen sind jedoch ebenfalls denkbar.

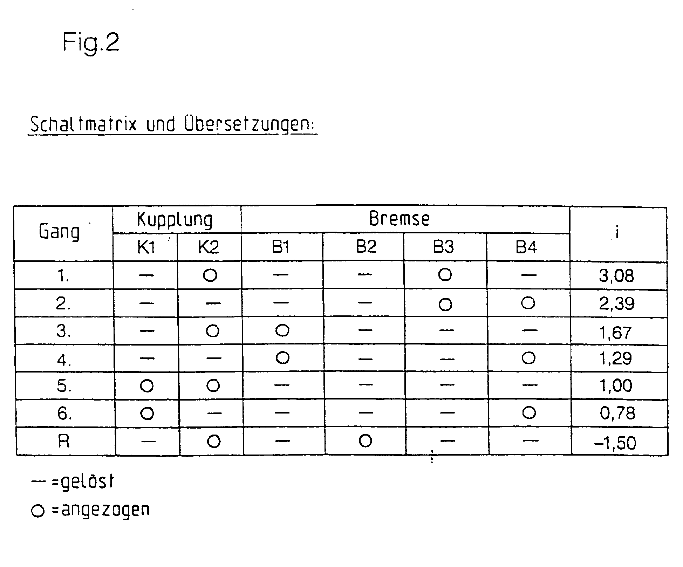

Die Figur 2 verdeutlicht anhand eines Schaltschemas eine mögliche Funktionsweise des in der Figur 1 beschriebenen Getriebes.

In der ersten Gangstufe wird zunächst lediglich das dritte Bremselement B3 betätigt, während die anderen Bremselemente und Kupplungen im mechanischen Drehzahl-/Drehmomentenwandler 5, das zweite Bremselement B2, das erste Bremselement B1 sowie das erste Kupplungselement K1 nicht betätigt bzw. ausgerückt sind. Somit ist nur das Hohlrad 8.3 des zweiten Planetenradsatzes am Gehäuse 11 festgestellt, während die anderen Planetenradsätze des mechanischen Drehzahl-/Drehmomentenwandlers 5 miteinander kämmen und eine Einheit bilden. Das erste Leitrad L1 wirkt in dem durch den Betriebsmodus der ersten Gangstufe gesteuerten Niedriggang-Geschwindigkeitsbereich reversierend über den Drehzahl-/Drehmomentenwandlers 5 auf den Steg und verstärkt das Abtriebsmoment. Im Gruppensatz 6 ist in dieser Gangstufe die erste Kupplungseinrichtung K2 betätigt. Diese ermöglicht es, daß das Hohlrad 10.3 mit der gleichen Drehzahl wie der Steg 10.4 angetrieben wird, d. h. im Ergebnis eine Übersetzung im Gruppenschaltsatz von 1 erzielt wird. Die Umschaltung in die zweite Gangstufe erfolgt durch Lösen der zweiten Kupplungseinrichtung K2 und Betätigung der vierten Bremseinrichtung B4. Falls ohne Lock-up-Kupplung gefahren wird, ergeben sich wie im 1. Gang sehr hohe Zugkräfte, da das Leitraddrehmoment L1 sich als Antriebsmoment über den Steg des Planetenradsatzes abstützt. Bei Ansteigen des Geschwindigkeitsverhältnisses wird durch eine automatische Steuerung auf die dritte Gangstufe umgeschalten. In diesem Fall wird das dritte Bremselement außer Betrieb genommen und das erste Bremselement B1 betätigt. Des weiteren sind die erste Kupplungseinrichtung K1 sowie das vierte Bremselement B4 außer Betrieb und die zweite Kupplungseinrichtung K2 betätigt. Die erste Leitradwelle 15 sowie das Sonnenrad 7.1 des ersten Planetenradsatzes des mechanischen Drehzahl-/Drehmomentenwandlers 5 werden somit gegenüber dem Gehäuse 11 festgestellt. Die Drehmomente des hydrodynamischen Drehmomenten/Drehzahlwandlers 3 entwickeln somit höhere Zugkräfte im 1. und 2. Gang, wenn die Lock-up-Kupplung (Durchkupplung bzw. Wandlerüberbrückungskupplung) nicht eingeschaltet ist. Im 1. und 2. Gang wird das Reaktionsmoment des Leitrades L1 über den Planetenradsatz so abgestützt, daß es als Antriebsmoment mit auf den Steg wirkt. Die Leistungsübertragung vom mechanischen Drehzahl-/Drehmomentenwandier 5 erfolgt durch weitere Drehzahl-/Drehmomentenwandlung über den Gruppensatz 6 auf die Abtriebswelle A des mechanischen-hydrodynamischen Verbundgetriebes 1. Die Umschaltung in die vierte Gangstufe erfolgt durch Lösen der vierten Bremseinrichtung B4 und Betätigung der zweiten Kupplungseinrichtung K2. Die Schalteinrichtungen im Grundgetriebe bleiben analog wie in der dritten Gangstufe betätigt. Bei weiterer Vergrößerung des Geschwindigkeitsverhältnisses wird in die fünfte Gangstufe gewechselt. In der fünften Gangstufe sind dabei jeweils nur die erste Kupplungseinrichtung und die zweite Kupplungseinrichtung K1 bzw. K2 betätigt. Die Turbinenradwelle 13 dreht sich in diesem Fall analog in der gleichen Richtung wie die erste Leitradwelle 15. In der sechsten Gangstufe sind die zweite Kupplungseinrichtung K2 gelöst und die vierte Bremseinrichtung B4 betätigt. Die Leistung wird in Gang 6 direkt von der Getriebeeingangswelle E auf die Turbinenradwelle 13 und damit auf den mechanischen Drehzahl-/Drehmomentenwandler 5 übertragen.

In der Regel erfolgt bei Vergrößerung des Geschwindigkeitsverhältnisses die Überbrückung des hydrodynamischen Drehzahl-/Drehmomentenwandlers 3 mittels der Überbrückungskupplung 14. Die Leistung wird dann direkt von der Getriebeeingangswelle E auf die Turbinenradwelle 13 und damit auf den mechanischen Drehzahl-/Drehmomentenwandler 5 übertragen. Der hydrodynamische Drehzahl-/Drehmomentenwandler kommt somit nur im 1. und 2. Gang zum Einsatz.

Die drei Grundgangstufen werden somit durch den Gruppensatz 6 in jeweils zwei Teilgangstufen aufgesplittet, so daß letztendlich ein Mehrganggetriebe entsteht, im dargestellten Fall ein Sechsganggetriebe. Im einzelnen wird dies durch die wechselweise Betätigung der Schalteinrichtungen am Gruppensatz 6 realisiert. In der jeweils ersten der beiden Teilgangstufen wird die vom mechanischen Drehzahl-/Drehmomentenwandler 5 an dessen Abtriebswelle anliegende Leistung mit einem Übersetzungsverhältnis von 1 auf die Getriebeausgangswelle A übertragen. In der zweiten Teilgangstufe, welche jeweils auf die erste Teilgangsstufe folgt, erfolgt eine Übersetzung von der an dem Ausgang des mechanischen Drehzahl-/Drehmomentenwandlers 5 anliegenden Drehzahl über den Gruppensatz 6 ins Schnelle.

Der hydrodynamische Retarder 25, welcher mit der Ausgangswelle A des Getriebes 1 über den Gruppensatz 6 verbunden ist, braucht somit hinsichtlich seines Füllungsgrades auch nur bei jeder zweiten Schaltung angepaßt werden. Dies bedeutet, daß lediglich beim jeweils übernächsten Gang der Füllungsgrad nachgeregelt werden muß. Um gangunabhängig gleiche Bremsmomente zu erzielen, muß die Füllung des Retarders bei Übersetzung der Nachschaltgruppe ins Schnelle größer sein, als bei der "Direktübersetzung" von 1,0. Je nach Rückschaltstrategie muß die Füllung angepaßt werden, wenn alle Gänge nacheinander zurückgeschaltet werden. Die Füllung muß jedoch nicht angepaßt werden, wenn nur zu jedem übernächsten Gang zurückgeschaltet wird.

Die in den Figuren 1 und 2 dargestellte Ausführung eines mechanisch-hydrodynamischen Verbundgetriebes 1 stellt eine vorteilhafte Ausführung beispielhaft dar. Die Anordnung bzw. Auslegung des mechanischen Drehzahl-/Drehmomentenwandlers und/oder des Gruppensatzes 6 kann jedoch auch in anderer Weise erfolgen.

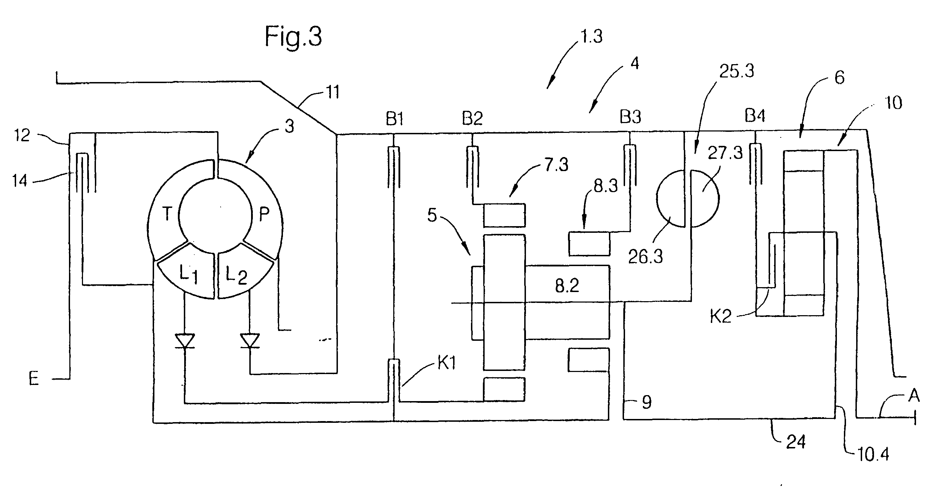

Die Figur 3 verdeutlicht eine weitere Ausführung eines erfindungsgemäß gestalteten mechanisch-hydrodynamischen Verbundgetriebes 1, hier 1.3, umfassend einen hydrodynamischen Getriebeteil 3 und einen mechanischen Getriebeteil 4, wobei der mechanische Getriebeteil 4 neben dem mechanischen Drehzahl-/Drehmomentenwandler noch einen sogenannten Gruppensatz aufweist. Der Grundaufbau des hydrodynamischen Getriebeteils 2 und des mechanischen Drehzahl-/Drehmomentenwandlers 5 entspricht dem in der Figur 1 beschriebenen, für gleiche Elemente werden daher die gleichen Bezugszeichen verwendet. In Analogie ist auch die Kopplung zwischen dem hydrodynamischen Getriebeteil 2 und dem mechanischen Drehzahl-/Drehmomentenwandler 5 des mechanischen Getriebeteils 4 in gleicher Weise ausgestaltet. Auch hier ist dem mechanischen Drehzahl-/Drehmomentenwandler 5 ein Gruppensatz 6 nachgeschaltet. Der Ausgang des mechanischen Drehzahl-/Drehmomentenwandlers 5 bildet dabei ebenfalls den Eingang des Gruppensatzes 6. Die Funktionsweise des Getriebes 1.3 unterscheidet sich nicht von der Funktionsweise des in der Figur 1 beschriebenen Getriebes 1. Erfindungsgemäß ist jedoch hier der hydrodynamische Retarder 25.3 dem als Nachschaltgruppe ausgebildeten Gruppensatz 6 räumlich vorgeordnet, jedoch räumlich dem mechanischen Drehzahl-/Drehmomentenwandler 5 nachgeordnet. Auch hier ist das Statorschaufelrad 26.3 am Gehäuse 11 des Getriebes 1.3 festgestellt. Das Rotorschaufelrad 27.3 ist mit der Kopplung zwischen dem Ausgang des mechanischen Drehzahl-/Drehmomentenwandlers 5 und dem Eingang des Gruppensatzes 6, der Verbindungswelle 24 bzw. jeweils dem Steg 9 bzw. 10.4 gekoppelt. Das Gesamtgetriebe verlängert sich somit lediglich um die Anordnung des hydrodynamischen Retarders 25.3 gegenüber der im Stand der Technik beschriebenen 3-Gang-Getriebeanordnung, während gegenüber der in der Figur 1 vorgeschlagenen Lösung die Gesamtgetriebelänge unverändert bestehen bleibt. Auch hier besteht aufgrund der sehr kompakten Ausführungsweise die Möglichkeit, das Gesamtgetriebe 1.3 in Form eines Baukastens, welcher aus einzelnen Getriebeelementen zusammengesetzt wird, auszuführen. Dabei kann der hydrodynamische Retarder 25.3 Bestandteil des räumlichen Teilbereiches des mechanischen Drehzahl-/Drehmomentenwandlers 5 oder aber des Nachschaltsatzes 6 sein. Vorzugsweise wird das Getriebeelement derart angeboten, daß der hydrodynamische Retarder Bestandteil des Bereiches des Getriebes 1.3 ist, welcher durch den mechanischen Drehzahl-/Drehmomentenwandler 5 bestimmt werden kann. An dieses Grundgetriebe können dann Nachschaltgruppen in unterschiedlichster Ausführung auf einfache Art und Weise angeflanscht werden. Somit ist es möglich, aus einem einfachen Dreiganggetriebe, welches durch die Kopplung des hydrodynamischen Drehzahl-/Drehmomentenwandlers 3 mit dem mechanischen Drehzahl-/Drehmomentenwandler 5 bestimmt ist, ein Mehrganggetriebe, vorzugsweise ein Sechsganggetriebe, zu entwickeln. Je nach Einsatzerfordernis kann somit ein voll funktionsfähiges Grundgetriebe mit drei Gängen und integrierter Bremsfunktion im Getriebe mittels des hydrodynamischen Retarders als Dreiganggetriebe oder aber durch Nachrüstung mit einem Nachschaltsatz in Form eines Gruppensatzes zu einem Mehrganggetriebe auf einfache Art und Weise aufgerüstet werden.

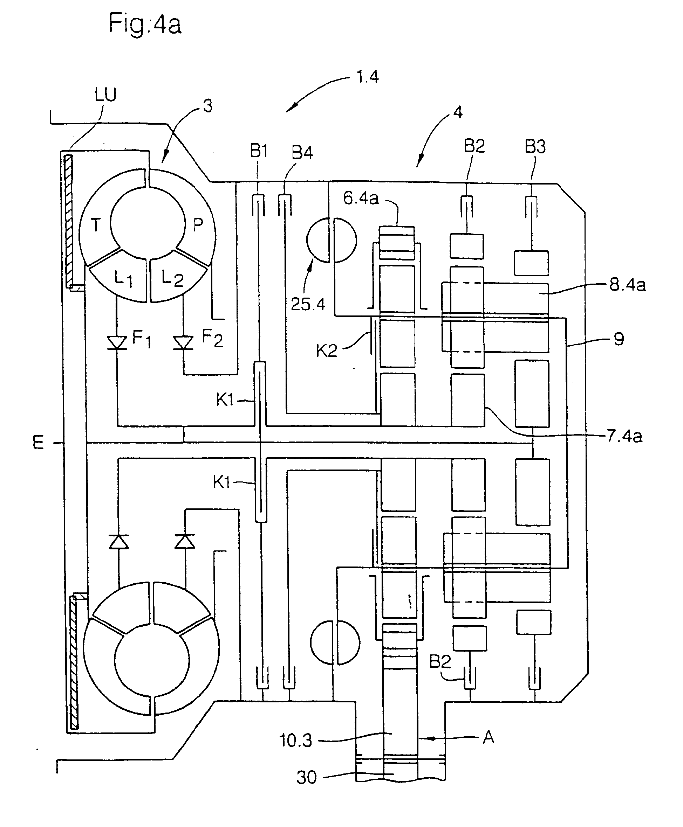

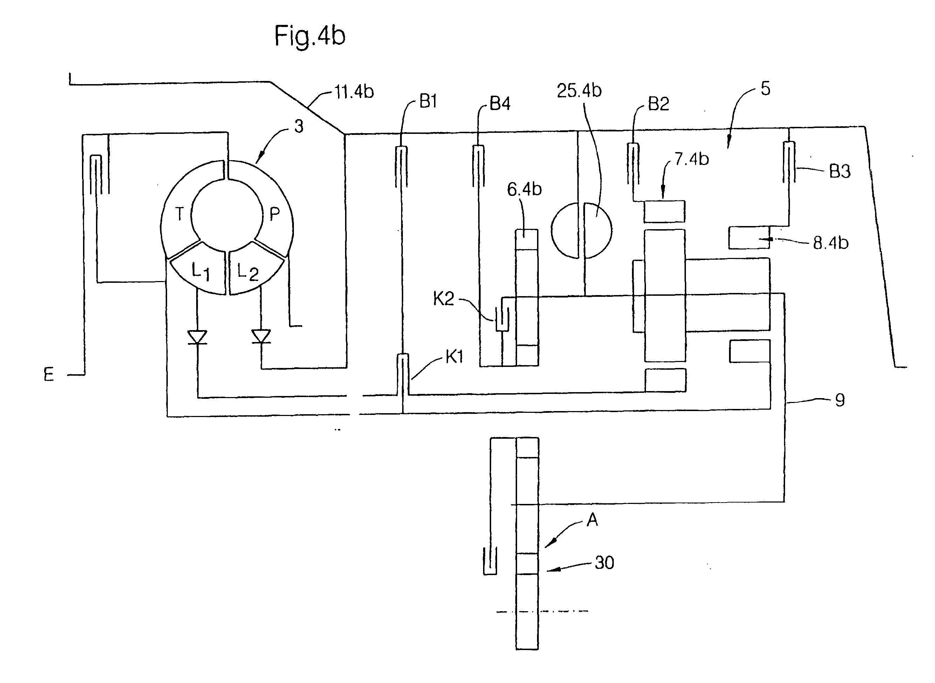

Die Figuren 4a und 4b verdeutlichen eine weitere erfindungsgemäße Modifikation eines Grundgetriebes, umfassend einen hydrodynamischen Getriebeteil 2 in Form eines hydrodynamischen Drehzahl-/Drehmomentenwandlers 3 sowie einen mechanischen Getriebeteil 4 mit einem mechanischen Drehzahl-/Drehmomentenwandler 5. Das Getriebe ist hier mit 1.4 bezeichnet. Der Grundaufbau und die Funktion entspricht der in den Figuren 1, 2 und 3 beschriebenen, weshalb für gleiche Elemente auch die gleichen Bezugszeichen verwendet werden. Auch hier ist der Nachschaltsatz, d.h. der Gruppensatz 6, hier mit 6.4a bzw. 6.4b bezeichnet, koaxial zum Grundgetriebe angeordnet. Der Nachschaltsatz bzw. die Nachschaltstufe ist, bezogen auf die Anordnung von Getriebeeingangswelle E und Getriebeausgangswelle A, vor dem mechanischen Drehzahl-/Drehmomentenwandler angeordnet. Diesem sind die gleichen Schalteinrichtungen wie in den vorher beschriebenen Getriebebaueinheiten zugeordnet, d.h. ein viertes Bremselement B4 und ein zweites Kupplungselement K2. Der Nachschaltsatz 6 ist ebenfalls als Planetenradsatz ausgeführt. Für den hydrodynamischen Retarder 25.4, hier mit 25.4a bezeichnet, ergeben sich hinsichtlich seiner Anordnung zwei Möglichkeiten. Eine erste Möglichkeit besteht darin, wie in der Figur 4a auch dargestellt, diesen räumlich vor dem Nachschaltsatz 6.4a anzuordnen. Eine weitere zweite Möglichkeit besteht darin, wie in der Figur 4b dargestellt, den hydrodynamischen Retarder 25.4b zwischen dem mechanischen Nachschaltsatz 6.4b und dem mechanischen Drehzahl-/Drehmomentenwandler 5 anzuordnen. Die Getriebeausgangswelle A ist im dargestellten Fall nicht koaxial zur Getriebeeingangswelle angeordnet, sondern parallel. Der Abtrieb, d.h. der Getriebeausgang wird vom Hohlrad der Nachschaltstufe bzw. einem, mit diesem kämmenden Zahnrad 30 oder anderen Übertragungseinrichtungen gebildet. Der Hauptabtrieb liegt somit parallel zu einer theoretisch gedachten Getriebesymmetrieachse. Zusätzlich besteht die Möglichkeit, den Abtrieb des mechanischen Drehzahl-/Drehmomentenwandlers 5 zum Antrieb für Nebenaggregate zu nutzen, beispielsweise durch Koppelung des Steges der Planetenradsätze 7.4a bzw. 8.4a mit einer Nebenabtriebswelle A-Neben.

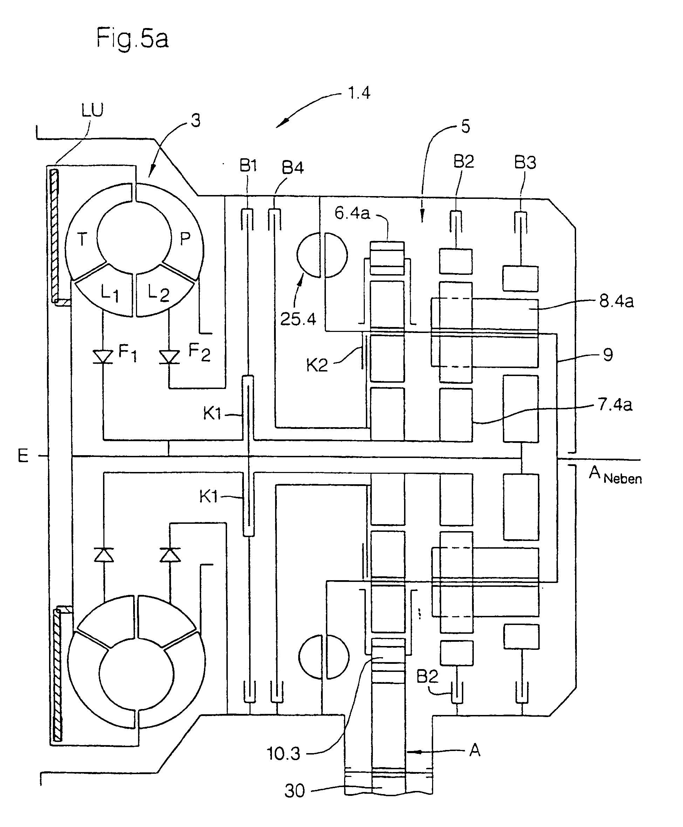

Die Figur 5a verdeutlicht eine Ausführung entsprechend der Figur 4a mit zusätzlich vorgesehener Antriebsmöglichkeit für ein Nebenaggregat. Der Nebenabtrieb A-Neben ist dabei mit dem Ausgang des mechanischen Drehzahl-/Drehmomentenwandlers und somit dem Eingang der mechanischen Nachschaltstufe 6 gekoppelt.

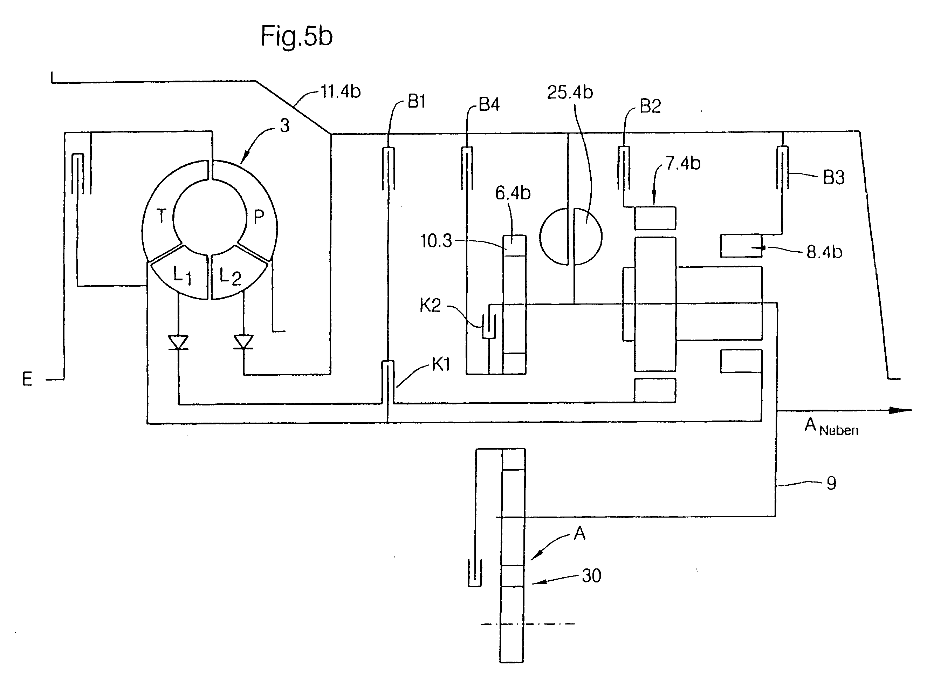

Die Figur 5b verdeutlicht eine Ausführung entsprechend der Figur 4b für ein 6-Gang-Getriebe, wobei der hydrodynamische Retarder 25.4b zwischen der Nachschaltstufe 6 und dem mechanischen Drehzahl-/Drehmomentenwandler 5 angeordnet ist. Auch in diesem Fall ist die mechanische Nachschaltstufe 6 vor dem mechanischen Drehzahl-/Drehmomentenwandler räumlich, von der Getriebeeingangswelle E zur Getriebeausgangswelle A betrachtet, angeordnet. Auch diese Ausführung stellt, wie die Ausführung in der Figur 4a, eine sehr kompakte Getriebebaueinheit 1.4b dar. Der Hauptabtrieb A erfolgt über den Getriebeausgang, welcher hier von dem Hohlrad 10.3 des Nachschaltsatzes 6.4b gebildet wird.

Die Figuren 4 und 5 verdeutlichen eine vorteilhafte Anbindung des Nachschaltsatzes 6 an den mechanischen Drehzahl-/Drehmomentenwandler, wobei die Gestaltung der Getriebebaueinheit nicht auf diese Anbindung, d.h. die Kopplung der Stege 10.4 bzw. 9 des Nachschaltsatzes 6 bzw. des mechanischen Drehzahl-/Drehmomentenwandlers 5, beschränkt ist. Andere Anbindungsmöglichkeiten sind ebenfalls denkbar.

Es besteht zur Realisierung von Nebenabtrieben auch die hier im Einzelnen nicht dargestellte Möglichkeit der Anordnung des Nachschaltsatzes 6 in Kraftflußrichtung von der Getriebeeingangswelle zur Getriebeausgangswelle betrachtet hinter dem mechanischen Drehzahl-/Drehmomentenwandler 5, d.h eine Anordnung entsprechend Figur 1. Der Nebenabtrieb kann dann durch Vorsehen eines weiteren Planetenradsatzes in Kraftflußrichtung vor dem mechanischen Drehzahl-/Drehmomentenwandler 5 und koaxial zu diesem realisiert werden, wobei wenigstens ein Element des Planetenradsatzes mit dem Abtrieb des mechanischen Drehzahl-/Dremomentenwandlers gekoppelt ist. Der Planetenradsatz wird dann entsprechend dem Nachschaltsatz in den Figuren 5a bzw. 5b angeordnet. Vorzugsweise erfolgt diese Koppelung durch Verbindung der Stege. Dem Planetenradsatz ist dann lediglich eine Bremseinrichtung in geeigneter Weise zuzuordnen, so daß das Hohlrad des Planetenradsatzes den Nebenabtrieb bildet.

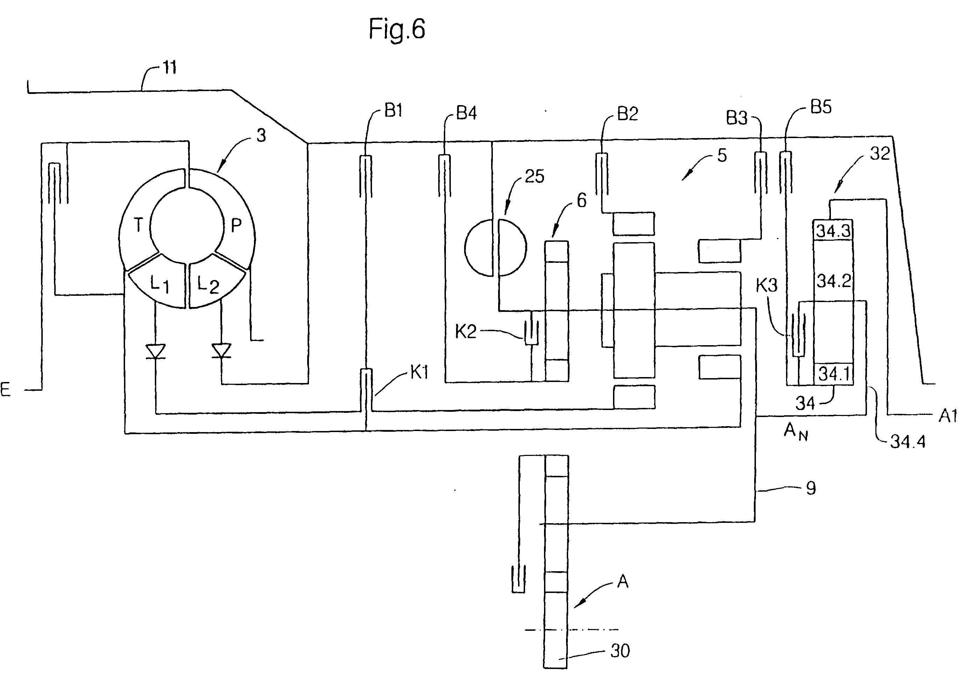

Die Figur 6 verdeutlicht beispielhaft anhand einer Ausführung entsprechend der Figur 5b mit Anbindung eines Nebenabtriebes zur Eignung der Gesamtgetriebebaueinheit als permanenter oder zuschaltbarer Allradantrieb. Dabei wird der Nebenabtrieb A-Neben an eine weitere zweite Nachschaltstufe 32 angebunden, welche vorzugsweise als einfacher Planetenradsatz analog zur Nachschaltstufe 6 ausgeführt ist. Der Planetenradsatz ist mit 34 bezeichnet und umfaßt wenigstens ein Sonnenrad 34.1, Planetenräder 34.2, einen Steg 34.4 und ein Hohlrad 34.3. Der Eingang dieses Nachschaltsatzes 32 wird vom Steg 34.4 gebildet. Dies bedeutet, daß dieser wenigstens mittelbar mit dem Nebenabtrieb bzw. der Nebenabtriebswelle A-Neben in Triebverbindung steht. Vorzugsweise ist die Nachschaltstufe 32 identisch zum Nachschaltsatz 6 ausgeführt, so daß eine gleichmäßige Leistungsaufsteilung auf beide Nachschaltstufen ermöglichbar ist, bzw. unter Berücksichtigung der Übertragungselemente hinsichtlich der auf die Achsen bzw. Räder des Fahrzeuges zu übertragenden leistung identisch ausgelegt Des weiteren sind dem Nachschaltsatz 32 die Schalteinrichtungen - eine Bremseinrichtung B5 und eine weitere Kupplungseinrichtung K3 - zugeordnet. Die Zuordnung erfolgt zu den einzelnen Getriebelementen des Nachschaltsatzes 32 in analoger Weise zum Nachschaltsatz 6. Dies bedeutet, daß das weitere fünfte Bremselement dem Sonnenrad 34.1 zugeordnet ist, während das weitere dritte Kupplungselement K3 eine Kopplung zwischen Planetenträger und Sonnenrad ermöglicht. Die beiden Ausgänge der Nachschaltstufen 6 und 32 werden hier jeweils vom Hohlrad gebildet. Dabei zeichnet sich die Nachschaltstufe 32 durch die Möglichkeit einer koaxialen Anordnung des Ausganges A1 zur Getriebeeingangswelle E aus. Der Ausgang A am Nachschaltsatz 6 ist parallel zur Getriebeeingangswelle angeordnet.

Die Figur 6 verdeutlicht beispielhaft eine mögliche Ausführung mit Nebenabtrieb zur Eignung für einen Allradantrieb. Entsprechend dem Fahrzeugtyp und der Anordnung des Fahrzeugmotors zum Getriebe wird dieses entweder längs oder quer zur Fahrtrichtung eingebaut, so daß aufgrund der winkligen Anordnung zueinander die einzelnen Abtriebe derart gestaltet werden müssen, daß diese einen Antrieb von zueinander parallel angeordneten Antriebselementen, vorzugsweise Achsen bilden. Dies wird auf einfache Art und Weise dadurch realisiert, daß eines der Hohlräder der beiden Nachschaltsätze mit einer Schrägverzahnung ausgeführt ist und mit einem Kegelrad kämmt. Es besteht theoretisch auch die Möglichkeit, den Nebenabtrieb 32 bzw. die mit diesem gekoppelten Antriebselemente zu- und abschaltbar zu gestalten. Dies geschieht auf einfache Art und Weise durch ein hier im einzelnen nicht dargestelltes Kupplungselement, welches eine Unterbrechung des Kraftflusses vom Nebenabtrieb 32 zu den mit diesem gekoppelten Getriebeelementen ermöglicht.

Die in den Figuren 1 bis 4 beschriebenen Ausführungen stellen vorteilhafte Ausgestaltungen des erfindungsgemäß ausgeführten hydrodynamisch-mechanischen Verbundgetriebes dar. Vorzugsweise ist das Getriebe als Mehrganggetriebe, umfassend sechs Gangstufen, ausgeführt. Denkbar ist jedoch auch, die Anordnung des hydrodynamischen Retarders in analoger Weise im Grundgetriebe, welches der Realisierung von drei Gangstufen dient. Dies gilt in Analogie auch für die Modifikationen entsprechend den Figuren 5 und 6.

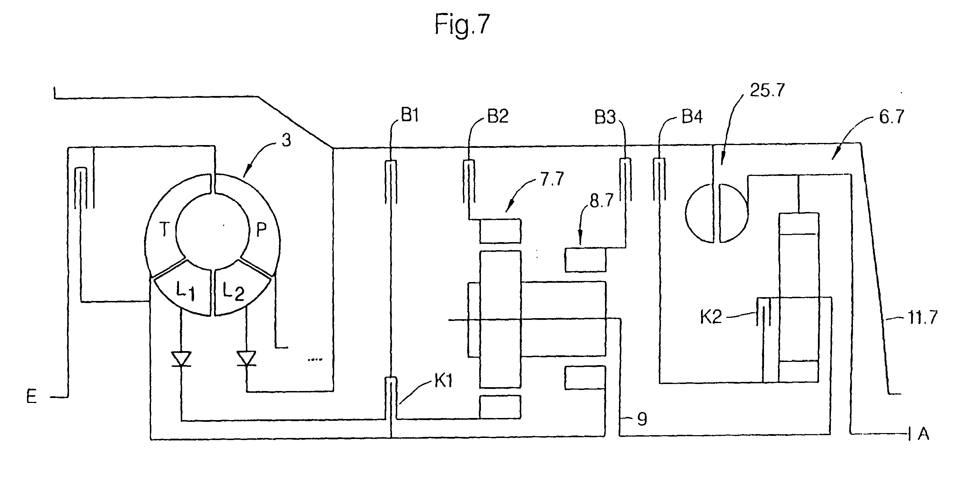

Die Figur 7 verdeutlicht eine weitere Modifikation der Ausführungen entsprechend der Figuren 1 bis 4 eines mechanisch-hydrodynamischen Verbundgetriebes 1.7. Der Grundaufbau entspricht dabei im wesentlichen dem in der Figur 3 beschriebenen, wobei jedoch die Anbindung des hydrodynamischen Retarders 25.7 gegenüber der in der Figur 3 unterschiedlich ausgeführt ist. Im dargestellten Fall ist das Rotorschaufelrad 27.7 des hydrodynamischen Retarders 25.7 direkt an die Abtriebswelle A bzw. das Hohlrad 10.3 des Nachschaltsatzes 6 gekoppelt.

## Patentansprüche

1. Hydrodynamisch-mechanisches Verbundgetriebe
mit einer Getriebeeingangswelle (E) und einer Getriebeausgangswelle (A); mit einem hydrodynamischen Getriebeteil (2) und einem mechanischen Getriebeteil (4), umfassend wenigstens eine Drehzahl-/Drehmomentenwandlungseinrichtung (5) mit wenigstens einem ersten Planetenradsatz (7) und einem zweiten Planetenradsatz (8) und mit einer Kopplung verbunden mit einem ersten Getriebeelement des zweiten Planetenradsatzes (8), wobei die Kopplung mit dem Abtrieb der mechanischen Drehzahl-/Drehmomentwandlungseinrichtung (5) verbunden ist wobei,
der Abtrieb des mechanischen Getriebeteiles (4) wenigstens mittelbar mit der Getriebeausgangswelle (A) in Triebverbindung steht,
mit einem hydrodynamischen Retarder (25), umfassend einen Stator (26) und ein Rotorschaufelrad (27) mit den merkmalen,
der hydrodynamische Retarder (25) ist im Getriebegehäuse (11) integriert; der mechanische Getriebeteil (4) umfasst wenigstens einen mechanischen Nachschaltsatz (6, 32), wobei der Abtrieb (9) des mechanischen Drehzahl-/Drehmomentenwandlers (5) mit dem mechanischen Nachschaltsatz (6, 32) gekoppelt ist;
das Rotorschaufelrad (27) des hydrodynamischen Retarders (25) ist mit der Abtriebswelle (9) des mechanischen Getriebeteiles (4) koppelbar;
der hydrodynamische Retarder ist räumlich dem mechanischen Nachschaltsatz (6, 32) des mechanischen Getriebeteiles (4), bezogen auf die Kraftflussrichtung im Traktionsbetrieb, vorgeordnet.

2. Hydrodynamisch-mechanisches Verbundgetriebe nach Anspruch 1, **dadurch gekennzeichnet, dass** in Kraftflussrichtung im Traktionsbetrieb betrachtet der hydrodynamische Retarder (25) räumlich vor dem mechanischen Drehzahl-/Drehmomentenwandler (5) angeordnet ist.

3. Hydrodynamisch-mechanisches Verbundgetriebe nach Anspruch 1, **dadurch gekennzeichnet, dass** der hydrodynamische Retarder (25) in Kraftflussrichtung im Traktionsbetrieb betrachtet räumlich hinter dem mechanischen Drehzahl-/Drehmomentwandler (5) angeordnet ist.

4. Hydrodynamisch-mechanisches Verbundgetriebe nach einem der Ansprüche 1 oder 2, **dadurch gekennzeichnet, dass** der erste Planetenradsatz (7) räumlich in Kraftflussrichtung im Traktionsbetrieb betrachtet vor dem zweiten Planetenradsatz (8) angeordnet ist.

5. Hydrodynamisch-mechanisches Verbundgetriebe nach Anspruch 4, **dadurch gekennzeichnet, dass** das erste Getriebeelement des ersten Planetenradsatzes und das erste Getriebeelement des zweiten Planetenradsatzes jeweils vom Steg (9) der Planetenradsätze (7, 8) gebildet wird.

6. Hydrodynamisch-mechanisches Verbundgetriebe nach einem der Ansprüche 4 oder 5, **gekennzeichnet durch** das folgende Merkmal:
mit Mitteln zur wenigstens mittelbaren Kopplung eines weiteren zweiten Elementes des ersten Planetenradsatzes (7) und eines weiteren zweiten Elementes des zweiten Planetenradsatzes (8) mit der Getriebeeingangswelle (E).

7. Hydrodynamisch-mechanisches Verbundgetriebe nach Anspruch 6, **dadurch gekennzeichnet, daß** das weitere zweite Getriebeelement des ersten Planetenradsatzes mit einem Leitrad (L1) des hydrodynamischen Drehzahl-/Drehmomentenwandlers (3) in Triebverbindung steht und Mittel zur wahlweisen Koppelung des zweiten Elementes des zweiten Planetenradsatzes an das Turbinenrad (T) und/oder der Getriebeeingangswelle (E) vorhanden sind.

8. Hydrodynamisch-mechanisches Verbundgetriebe nach Anspruch 7, **dadurch gekennzeichnet, dass** das Mittel zur wahlweisen Koppelung eine schaltbare Kupplungseinrichtung (14) ist.

9. Hydrodynamisch-mechanisches Verbundgetriebe nach einem der Ansprüche 4 bis 8, **dadurch gekennzeichnet, dass** das zweite Getriebeelement des ersten Planetenradsatzes (7) vom Sonnenrad (7.1) des ersten Planetenradsatzes (7) und das zweite Element des zweiten Planetenradsatzes (8) vom Sonnenrad (8.1) des zweiten Planetenradsatzes (8) gebildet wird.

10. Hydrodynamisch-mechanisches Verbundgetriebe nach einem der Ansprüche 6 bis 9, **dadurch gekennzeichnet, dass** das erste Leitrad (L1) über einen Freilauf (16) mit dem Sonnenrad (7.1) des ersten Planetenradsatzes (7) des mechanischen Drehzahl-/Drehmomentenwandlers (5) gekoppelt ist.

11. Hydrodynamisch-mechanisches Verbundgetriebe nach einem der Ansprüche 4 bis 10, **dadurch gekennzeichnet, dass** ein zweites Leitrad (L2) des hydrodynamischen Drehzahl-/Drehmomentenwandlers (3) über einen Freilauf (18) mit dem Getriebegehäuse (11) gekoppelt ist.

12. Hydrodynamisch-mechanisches Verbundgetriebe nach einem der Ansprüche 4 bis 11, **dadurch gekennzeichnet, dass** dem mechanischen Drehzahl-/Drehmomentenwandler (5) eine Vielzahl von Schalteinrichtungen (B1, B2, 83, K1) in Form von Kupplungen und/oder Bremseinrichtungen zugeordnet sind.

13. Hydrodynamisch-mechanisches Verbundgetriebe nach Anspruch 12, **dadurch gekennzeichnet, dass** das zweite Element (7.1) des ersten Ptanetenradsatzes mittels einer ersten Bremseinrichtung (B1) feststellbar ist.

14. Hydrodynamisch-mechanisches Verbundgetriebe nach einem der Ansprüche 12 oder 13, **dadurch gekennzeichnet, dass** ein drittes Element (7.3) des ersten Planetenradsatzes (7) mittels einer zweiten Bremseinrichtung (B2) festsetzbar ist.

15. Hydrodynamisch-mechanisches Verbundgetriebe nach einem der Ansprüche 12 bis 14, **dadurch gekennzeichnet, dass** ein drittes Getriebeelement (8.3) des zweiten Planetenradsatzes (8) mittels einer dritten Bremseinrichtung (B3) feststellbar ist.

16. Hydrodynamisch-mechanisches Verbundgetriebe nach einem der Ansprüche 4 bis 15, **dadurch gekennzeichnet, dass** Mittel vorgesehen sind, welche eine Kopplung des zweiten Getriebeelementes (7.1) des ersten Planetenradsatzes (7) und des zweiten Getriebeelementes (8.1) des zweiten Planetenradsatzes (8) und damit der ersten Leitradwelle (L1) mit der Turbinenradwelle (13) ermöglichen.

17. Hydrodynamisch-mechanisches Verbundgetriebe nach Anspruch 16, **dadurch gekennzeichnet, dass** das Mittel eine Kupplungseinrichtung (K1) ist.

18. Hydrodynamisch-mechanisches Verbundgetriebe nach einem der Ansprüche 4 bis 17, **dadurch gekennzeichnet, dass** die als Bremseinrichtungen (B1, B2, B3, B4) und/oder Kupplungseinrichtungen (K1, K2) ausgeführten Schaltelemente in Lamellenbauart ausgeführt sind.

19. Hydrodynamisch-mechanisches Verbundgetriebe nach einem der Ansprüche 1 bis 18, **dadurch gekennzeichnet, dass** der Nachschaltsatz (6, 32) wenigstens einen Planetenradsatz (10, 34), umfassend ein Sonnenrad (10.1, 34.1), ein Hohlrad (10.3, 34.3), Planetenräder (10.2, 34.2) und einen Planetenträger (10.4, 34.4) umfasst.

20. Hydrodynamisch-mechanisches Verbundgetriebe nach Anspruch 19, **dadurch gekennzeichnet, dass** der Eingang jedes Planetenradsatzes vom Planetenträger (10.4, 34.4) des Planetenradsatzes (10, 34) gebildet wird.

21. Hydrodynamisch-mechanisches Verbundgetriebe nach einem der Ansprüche 19 oder 20, **dadurch gekennzeichnet, dass** der Abtrieb vom Planetenradsatz (10, 34) vom Hohlrad (10.3, 34.3) des Planetenradsatzes (10, 34) gebildet wird.

22. Hydrodynamisch-mechanisches Verbundgetriebe nach einem der Ansprüche 19 bis 21, **gekennzeichnet durch** die folgenden Merkmale:
dem Planetenradsatz (10, 34) ist eine weitere vierte Bremseinrichtung (B4) und eine weitere zweite Kupplungseinrichtung (K2) zugeordnet;
die vierte Bremseinrichtung (B4) ist mit dem Sonnenrad (10.1, 34.1) des Planetenradsatzes (10, 34) koppelbar;
die zweite Kupplungseinrichtung (K2) dient der Kopplung des Sonnenrades (10.1, 34.1) mit dem Planetenträger (10.4, 33.4) des Planetenradsatzes (10, 34).

23. Hydrodynamisch-mechanisches Verbundgetriebe nach einem der Ansprüche 1 bis 22, **dadurch gekennzeichnet, dass** der Abtrieb (10.3, 34.3) des Nachschaltsatzes (6, 33) mit einer weiteren Drehzahl-/Drehmomentenwandlungseinrichtung gekoppelt ist.

24. Hydrodynamisch-mechanisches Verbundgetriebe nach Anspruch 23, **dadurch gekennzeichnet, dass** die weitere Drehzahl-/Drehmomentenwandlungseinrichtung einen ersten Abtrieb aufweist, welcher mit einem anzutreibenden Nebenaggregat koppelbar ist.

25. Hydrodynamisch-mechanisches Verbundgetriebe nach einem der Ansprüche 1 bis 24, **gekennzeichnet durch** die folgenden Merkmale:
mit einem Betriebsmittelversorgungssystem für den hydrodynamischen Retarder und den hydrodynamischen Getriebeteil;
mit Mitteln zur Betriebsmittelversorgung des hydrodynamischen Retarders und/oder des hydrodynamischen Getriebeelementes aus dem Betriebsmittelversorgungssystem.

26. Hydrodynamisch-mechanisches Verbundgetriebe nach Anspruch 25, **dadurch gekennzeichnet, dass** das Betriebsmittelversorgungssystem im Getriebegehäuse (11) integriert ist.

27. Hydrodynamisch-mechanisches Verbundgetriebe nach einem der Ansprüche 1 bis 26, **dadurch gekennzeichnet, dass** der mechanische Drehzahl-/Drehmomentenwandler (5) und die Nachschaltgruppe (6, 34) derart ausgelegt sind, dass zwischen den einzelnen Gangstufen im wesentlichen konstante Stufensprünge erzielt werden und dieser vom ersten in den zweiten Gang einen Wert von < = 1,45 einnimmt.

28. Hydrodynamisch-mechanisches Verbundgetriebe nach einem der Ansprüche 1 bis 27, **gekennzeichnet durch** die folgenden Merkmale:
das Getriebe ist räumlich in zwei Getriebeteile unterteilbar - einen ersten Getriebeteil und einen zweiten Getriebeteil;
der erste Getriebeteil ist als Grundgetriebe ausgeführt und umfasst den hydrodynamischen Getriebeteil (2) und den mechanischen Drehzahl-/Drehmomentenwandler (5) des mechanischen Getriebeteils (4);
der zweite Getriebeteil ist koaxial zum Grundgetriebe anordenbar und umfasst den Nachschaltsatz (6, 32).

29. Hydrodynamisch-mechanisches Verbundgetriebe nach Anspruch 28, **dadurch gekennzeichnet, dass** der hydrodynamische Retarder (25) im Grundgetriebe integriert ist.

30. Hydrodynamisch-mechanisches Verbundgetriebe nach Anspruch 28, **dadurch gekennzeichnet, dass** der hydrodynamische Retarder im zweiten Getriebeteil integriert ist.

## Claims

1. A hydrodynamic-mechanical compound transmission;
with a transmission input shaft (E) and a transmission output shaft (A);
with a hydrodynamic transmission part (2) and a mechanical transmission part (4), comprising at least one speed-torque converter device (5) with at least one first planet wheel set (7) and a second planet wheel set (8) and with a coupling connected with a first transmission element of the second planet wheel set (8), with the coupling being connected with the power take-off of the mechanical speed-torque converter device (5); with the power take-off of the mechanical transmission part (4) being in driving connection at least indirectly with the transmission output shaft (A); with a hydrodynamic retarder (25), comprising a stator (26) and a rotor blade wheel (27), with the features:
the hydrodynamic retarder (25) is integrated in the transmission housing (11);
the mechanical transmission part (4) comprises at least one mechanical rear-mounted set (6, 32), with the power take-off (9) of the mechanical speed-torque converter (5) being coupled with the mechanical rear-mounted set (6, 32);
the rotor blade wheel (27) of the hydrodynamic retarder (25) can be coupled with the driven shaft (9) of the mechanical transmission part (4);
the hydrodynamic retarder is provided spatially upstream of the mechanical rear-mounted set (6, 32) of the mechanical transmission part (4), relating to the direction of power flow in traction operation.

2. A hydrodynamic-mechanical compound transmission according to claim 1, **characterized in that** the hydrodynamic retarder (25) is arranged spatially upstream of the mechanical speed-torque converter (5) as seen in the direction of power flow in traction operation.

3. A hydrodynamic-mechanical compound transmission according to claim 1, **characterized in that** the hydrodynamic retarder (25) is arranged spatially behind the mechanical speed-torque converter (5) as seen in the direction of power flow in traction operation.

4. A hydrodynamic-mechanical compound transmission according to one of the claims 1 or 2, **characterized in that** the first planet wheel set (7) is arranged spatially before the second planet wheel set (8) as seen in the direction of power flow in traction operation.

5. A hydrodynamic-mechanical compound transmission according to claim 4, **characterized in that** the first transmission element of the first planet wheel set and the first transmission element of the second planet wheel set are each formed by the planet carrier (9) of the planet wheel set (7, 8).

6. A hydrodynamic-mechanical compound transmission according to one of the claims 4 or 5, **characterized by** the following feature:
with means for coupling at least indirectly a further second element of the first planet wheel set (7) and a further second element of the second planet wheel set (8) with the transmission input shaft (E).

7. A hydrodynamic-mechanical compound transmission according to claim 6, **characterized in that** the further second transmission element of the first planet wheel set is in driving connection with the guide wheel (L1) of the hydrodynamic speed-torque converter (3) and means are present for optional coupling of the second element of the second planet wheel set to the turbine wheel (T) and/or the transmission input shaft (E).

8. A hydrodynamic-mechanical compound transmission according to claim 7, **characterized in that** the means for optional coupling is an engaging and disengaging clutch device (14).

9. A hydrodynamic-mechanical compound transmission according to one of the claims 4 to 8, **characterized in that** the second transmission element of the first planet wheel set (7) is formed by the sun wheel (7.1) of the first planet wheel set (7) and the second element of the second planet wheel set (8) by the sun wheel (8.1) of the second planet wheel set (8).

10. A hydrodynamic-mechanical compound transmission according to one of the claims 6 to 9, **characterized in that** the first guide wheel (L1) is coupled by way of a free-wheel (16) with the sun wheel (7.1) of the first planet wheel set (7) of the mechanical speed-torque converter (5).

11. A hydrodynamic-mechanical compound transmission according to one of the claims 4 to 10, **characterized in that** a second guide wheel (L2) of the hydrodynamic speed-torque converter (3) is coupled with the transmission housing (11) by way of a free-wheel (18).

12. A hydrodynamic-mechanical compound transmission according to one of the claims 4 to 11, **characterized in that** the mechanical speed-torque converter (5) is associated with a plurality of switching devices (B1, B2, B3, K1) in the form of clutches and/or breaking devices.

13. A hydrodynamic-mechanical compound transmission according to claim 12, **characterized in that** the second element (7.1) of the first planet wheel set can be fixed by means of a first braking device (B1).

14. A hydrodynamic-mechanical compound transmission according to one of the claims 12 or 13, **characterized in that** a third element (7.3) of the first planet wheel set (7) can be fixed by means of a second braking device (B2).

15. A hydrodynamic-mechanical compound transmission according to one of the claims 12 to 14, **characterized in that** a third transmission element (8.3) of the second planet wheel set (8) can be fixed by means of a third braking device (B3).

16. A hydrodynamic-mechanical compound transmission according to one of the claims 4 to 15, **characterized in that** means are provided which allow a coupling of the second transmission element (7.1) of the first planet wheel set (7) and the second transmission element (8.1) of the second planet wheel set (8) and thus the first guide wheel shaft (L1) with the turbine wheel shaft (13).

17. A hydrodynamic-mechanical compound transmission according to claim 16, **characterized in that** the means is a clutch device (K1).

18. A hydrodynamic-mechanical compound transmission according to one of the claims 4 to 17, **characterized in that** the switching elements configured as braking devices (B1, B2, B3, B4) and/or clutch devices (K1, K2) are provided with a multiple-disk configuration.

19. A hydrodynamic-mechanical compound transmission according to one of the claims 1 to 18, **characterized in that** the rear-mounted set (6, 32) comprises at least one planet wheel set (10, 34), comprising a sun wheel (10.1, 34.1), a ring gear (10.3, 34.3), planet wheels (10.2, 34.2) and a planet carrier (10.4, 34.4).

20. A hydrodynamic-mechanical compound transmission according to claim 19, **characterized in that** the input of each planet wheel set is formed by the planet carrier (10.4, 34.4) of the planet wheel set (10, 34).

21. A hydrodynamic-mechanical compound transmission according to one of the claims 19 or 20, **characterized in that** the power take-off from the planet wheel set (10, 34) is formed by the hollow wheel (10.3, 34.3) of the planet wheel set (10, 34).

22. A hydrodynamic-mechanical compound transmission according to one of the claims 19 to 21, **characterized by** the following features:
the planet wheel set (10, 34) is associated with a further fourth braking device (B4) and a further second coupling device (K2);
the fourth braking device (B4) can be coupled with the sun wheel (10.1, 34.1) of the planet wheel set (10, 34);
the second clutch device (K2) is used for coupling the sun wheel (10.1, 34.1) with the planet carrier (10.4, 33.4) of the planet wheel set (10, 34).

23. A hydrodynamic-mechanical compound transmission according to one of the claims 1 to 22, **characterized in that** the power take-off (10.3, 34.3) of the rear-mounted step (6, 33) is coupled with a further speed-torque converting device.

24. A hydrodynamic-mechanical compound transmission according to claim 23, **characterized in that** the further speed-torque converting device comprises a first power take-off which can be coupled with an accessory unit to be driven.

25. A hydrodynamic-mechanical compound transmission according to one of the claims 1 to 24, **characterized by** the following features:
with an operating-medium supply system for the hydrodynamic retarder and the hydrodynamic transmission part;
with means for supplying the operating medium to the hydrodynamic retarder and/or the hydrodynamic transmission elements from the operating-medium supply system.

26. A hydrodynamic-mechanical compound transmission according to claim 25, **characterized in that** the operating-medium supply system is integrated in the transmission housing (11).

27. A hydrodynamic-mechanical compound transmission according to one of the claims 1 to 26, **characterized in that** the mechanical speed-torque converter (5) and the rear-mounted group (6, 34) are configured in such a way that substantially constant progressive ratios can be achieved between the individual gear ratios and the same assumes from the first to the second gear a value of <= 1.45.

28. A hydrodynamic-mechanical compound transmission according to one of the claims 1 to 27, **characterized by** the following features:
the transmission can be subdivided in a spatial respect into two transmission parts, a first transmission part and a second transmission part; the first transmission part is configured as a basic transmission and comprises the hydrodynamic transmission part (2) and the mechanical speed-torque converter (5) of the mechanical transmission part (4);
the second transmission part can be arranged coaxially relative to the basic transmission and comprises the rear-mounted set (6, 32).

29. A hydrodynamic-mechanical compound transmission according to claim 28, **characterized in that** the hydrodynamic retarder (25) is integrated in the basic transmission.

30. A hydrodynamic-mechanical compound transmission according to claim 28, **characterized in that** the hydrodynamic retarder is integrated in the second transmission part.

## Revendications

1. Boîte de vitesses hydrodynamique-mécanique
avec un arbre d'entrée de boîte (E) et un arbre de sortie de boîte (A) ;
avec une partie de boîte de vitesses hydrodynamique (2) et une partie de boîte de vitesses mécanique (4), comprenant au moins un dispositif de conversion nombre de tours/couple de rotation (5) avec au moins un premier engrenage planétaire (7) et un deuxième engrenage planétaire (8) et avec un accouplement relié à un premier élément d'engrenage du deuxième engrenage planétaire (8), lequel accouplement est relié à la sortie du dispositif mécanique de conversion nombre de tours/couple de rotation (5), dans lequel
la sortie de la partie de boîte mécanique (4) est en liaison d'entraînement au moins indirectement avec l'arbre de sortie de boîte (A),
avec un ralentisseur hydrodynamique (25), comprenant un stator (26) et une roue à aubes servant de rotor (27),
**caractérisée en ce que** :
le ralentisseur hydrodynamique (25) est intégré dans le carter de la boîte de vitesses (11) ;
la partie de boîte de vitesses mécanique (4) comprend au moins un étage de transmission mécanique d'aval (6, 32), la sortie (9) du convertisseur mécanique nombre de tours/couple de rotation (5) étant couplée à l'étage de transmission mécanique d'aval (6, 32) ;
la roue à aubes servant de rotor (27) du ralentisseur hydrodynamique (25) peut être couplée avec l'arbre de sortie (9) de la partie de boîte mécanique (4) ;
le ralentisseur hydrodynamique est disposé dans l'espace avant l'étage de transmission mécanique d'aval (6, 32) de la partie de boîte mécanique (4), par rapport au sens de circulation de la force en mode de traction.

2. Boîte de vitesses hydrodynamique-mécanique selon la revendication 1, **caractérisée en ce que** le ralentisseur hydrodynamique (25) est disposé dans l'espace, dans le sens de circulation de la force en mode de traction, en amont du convertisseur mécanique nombre de tours/couple de rotation (5).

3. Boîte de vitesses hydrodynamique-mécanique selon la revendication 1, **caractérisée en ce que** le ralentisseur hydrodynamique (25) est disposé dans l'espace, dans le sens de circulation de la force en mode de traction, en aval du convertisseur mécanique nombre de tours/couple de rotation (5).

4. Boîte de vitesses hydrodynamique-mécanique selon l'une quelconque des revendications 1 ou 2, **caractérisée en ce que** le premier engrenage planétaire (7) est disposé dans l'espace, dans le sens de circulation de la force en mode de traction, en amont du deuxième engrenage planétaire (8).

5. Boîte de vitesses hydrodynamique-mécanique selon la revendication 4, **caractérisée en ce que** le premier élément d'engrenage du premier train planétaire et le premier élément d'engrenage de l'engrenage planétaire sont formés chacun par la traverse (9) des trains planétaires (7, 8).

6. Boîte de vitesses hydrodynamique-mécanique selon l'une quelconque des revendications 4 ou 5, **caractérisée en ce qu'**elle comporte des moyens pour l'accouplement au moins indirect d'un deuxième élément du premier engrenage planétaire (7) et d'un autre deuxième élément du deuxième engrenage planétaire (8) avec l'arbre d'entrée de boîte (E).

7. Boîte de vitesses hydrodynamique-mécanique selon la revendication 6, **caractérisée en ce que** l'autre deuxième élément d'engrenage du premier train planétaire est en liaison motrice avec une roue de diffuseur (L1) du convertisseur hydrodynamique nombre de tours/couple de rotation (3) et des moyens sont prévus pour l'accouplement sélectif du deuxième élément du deuxième train planétaire à la roue de turbine (T) et/ou à l'arbre d'entrée de boîte (E).

8. Boîte de vitesses hydrodynamique-mécanique selon la revendication 7, **caractérisée en ce que** le moyen d'accouplement sélectif est un dispositif d'accouplement (14) commutable.

9. Boîte de vitesses hydrodynamique-mécanique selon l'une quelconque des revendications 4 à 8, **caractérisée en ce que** le deuxième élément d'engrenage du premier engrenage planétaire (7) est formé par la roue solaire (7.1) du premier engrenage planétaire (7) et le deuxième élément du deuxième engrenage planétaire (8) par la roue solaire (8.1) du deuxième engrenage planétaire (8).

10. Boîte de vitesses hydrodynamique-mécanique selon l'une quelconque des revendications 6 à 9, **caractérisée en ce que** la première roue de diffuseur (L1) est couplée par une roue libre (16) à la roue solaire (7.1) du premier engrenage planétaire (7) du convertisseur mécanique nombre de tours/couple de rotation (5).

11. Boîte de vitesses hydrodynamique-mécanique selon l'une quelconque des revendications 4 à 10, **caractérisée en ce qu'**une deuxième roue de diffuseur (L2) du convertisseur hydrodynamique nombre de tours/couple de rotation (3) est couplée par une roue libre (18) au carter de la boîte de vitesses (11).

12. Boîte de vitesses hydrodynamique-mécanique selon l'une quelconque des revendications 4 à 11, **caractérisée en ce que** le convertisseur mécanique nombre de tours/couple de rotation (5) est associé à une pluralité de dispositifs de commutation (B1, B2, B3, K1) prenant la forme d'accouplements et/ou de dispositifs de freinage.

13. Boîte de vitesses hydrodynamique-mécanique selon la revendication 12, **caractérisée en ce que** le deuxième élément (7.1) du premier train planétaire peut être immobilisé au moyen d'un premier dispositif de freinage (B1).

14. Boîte de vitesses hydrodynamique-mécanique selon l'une quelconque des revendications 12 ou 13, **caractérisée en ce qu'**un troisième élément (7.3) du premier engrenage planétaire (7) peut être immobilisé au moyen d'un deuxième dispositif de freinage (B2).

15. Boîte de vitesses hydrodynamique-mécanique selon l'une quelconque des revendications 12 à 14, **caractérisée en ce qu'**un troisième élément d'engrenage (8.3) du deuxième engrenage planétaire (8) peut être immobilisé au moyen d'un troisième dispositif de freinage (B3).

16. Boîte de vitesses hydrodynamique-mécanique selon l'une quelconque des revendications 4 à 15, **caractérisée en ce que** des moyens sont prévus pour permettre le couplage du deuxième élément d'engrenage (7.1) du premier engrenage planétaire (7) et du deuxième élément d'engrenage (8.1) du deuxième engrenage planétaire (8) et ainsi de la première roue conductrice (L1) avec l'arbre de roue de turbine (13).

17. Boîte de vitesses hydrodynamique-mécanique selon la revendication 16, **caractérisée en ce que** le moyen est un dispositif d'embrayage (K1).

18. Boîte de vitesses hydrodynamique-mécanique selon l'une quelconque des revendications 4 à 17, **caractérisée en ce que** les éléments de commutation servant de dispositifs de freinage (B1, B2, B3, B4) et/ou de dispositifs d'accouplement (K1, K2) sont construits en lamelles.

19. Boîte de vitesses hydrodynamique-mécanique selon l'une quelconque des revendications 1 à 18, **caractérisée en ce que** l'étage de transmission mécanique d'aval (6, 32) comprend au moins un train planétaire (10, 34) comportant une roue solaire (10.1, 34.1), une roue creuse (10.3, 34.3), des roues planétaires (10.2, 34.2) et un support de train planétaire (10.4, 34.4).

20. Boîte de vitesses hydrodynamique-mécanique selon la revendication 19, **caractérisée en ce que** l'entrée de chaque train planétaire est formée par le support de train planétaire (10.4, 34.4) de l'engrenage planétaire (10, 34).

21. Boîte de vitesses hydrodynamique-mécanique selon l'une quelconque des revendications 19 ou 20, **caractérisée en ce que** la sortie de l'engrenage planétaire (10, 34) est formée par la roue creuse (10.3, 34.3) de l'engrenage planétaire (10, 34).

22. Boîte de vitesses hydrodynamique-mécanique selon l'une quelconque des revendications 19 à 21, **caractérisée en ce que** :
le train planétaire (10, 34) est associé à un quatrième dispositif de freinage (B4) et à un deuxième dispositif d'embrayage (K2) ;
le quatrième dispositif de freinage (B4) peut être couplé à la roue solaire (10.1, 34.1) de l'engrenage planétaire (10, 34) ;
le deuxième dispositif d'embrayage (K2) sert à coupler la roue solaire (10.1,34.1) au support de train planétaire (10.4, 33.4) de l'engrenage planétaire (10, 34).

23. Boîte de vitesses hydrodynamique-mécanique selon l'une quelconque des revendications 1 à 22, **caractérisée en ce que** la sortie (10.3, 34.3) de l'étage de transmission mécanique d'aval (6, 33) est couplée à un autre dispositif de conversion nombre de tours/couple de rotation.

24. Boîte de vitesses hydrodynamique-mécanique selon la revendication 23, **caractérisée en ce que** l'autre dispositif de conversion nombre de tours/couple de rotation possède une première sortie qui peut être couplée à un groupe secondaire à entraîner.

25. Boîte de vitesses hydrodynamique-mécanique selon l'une quelconque des revendications 1 à 24, **caractérisée en ce qu'**elle comporte :
un système d'alimentation en fluide de travail pour le ralentisseur hydrodynamique et la partie de boîte de vitesses hydrodynamique ;
avec des moyens pour l'alimentation en fluide de travail du ralentisseur hydrodynamique et/ou de l'élément d'engrenage hydrodynamique à partir du système d'alimentation en fluide de travail.

26. Boîte de vitesses hydrodynamique-mécanique selon la revendication 25, **caractérisée en ce que** le système d'alimentation en fluide de travail est intégré dans le carter de la boîte de vitesses (11).

27. Boîte de vitesses hydrodynamique-mécanique selon l'une quelconque des revendications 1 à 26, **caractérisée en ce que** le convertisseur mécanique nombre de tours/couple de rotation (5) et l'étage de transmission mécanique d'aval (6, 34) sont conçus de telle manière que des sauts de rapport sensiblement constants soient obtenus entre les différents rapports et que celui entre le premier et le deuxième rapport ait une valeur inférieure ou égale à 1,45.

28. Boîte de vitesses hydrodynamique-mécanique selon l'une quelconque des revendications 1 à 27, **caractérisée en ce que** :
la boîte de vitesses peut être divisée dans l'espace en deux parties de boîte : une première partie de boîte de vitesses et une deuxième partie de boîte de vitesses ;
la première partie de boîte de vitesses est conçue comme la boîte de vitesses de base et comprend la partie de boîte de vitesses hydrodynamique (2) et le convertisseur mécanique nombre de tours/couple de rotation (5) de la partie de boîte de vitesses mécanique (4) ;
la deuxième partie de boîte de vitesses peut être disposée de façon coaxiale par rapport à la boîte de vitesses de base et comprend l'étage de transmission mécanique d'aval (6, 32).

29. Boîte de vitesses hydrodynamique-mécanique selon la revendication 28, **caractérisée en ce que** le ralentisseur hydrodynamique (25) est intégré dans la boîte de vitesses de base.

30. Boîte de vitesses hydrodynamique-mécanique selon la revendication 28, **caractérisée en ce que** le ralentisseur hydrodynamique (25) est intégré dans la deuxième partie de boîte de vitesses.
